**Europäisches Patentamt**

(19) **European Patent Office**

**Office européen des brevets**

(11) Veröffentlichungsnummer: **0 094 543**
**B1**

(12) # EUROPÄISCHE PATENTSCHRIFT

(45) Veröffentlichungstag der Patentschrift:
**08.10.86**

(51) Int. Cl.⁴: **B 01 D 13/00**

(21) Anmeldenummer: **83104275.9**

(22) Anmeldetag: **02.05.83**

(54) **Verfahren und Vorrichtung zur Transmembrandestillation.**

(30) Priorität: 14.05.82 DE 3218319
06.04.83 DE 3312359

(43) Veröffentlichungstag der Anmeldung:
**23.11.83 Patentblatt 83/47**

(45) Bekanntmachung des Hinweises auf die Patenterteilung:
**08.10.86 Patentblatt 86/41**

(84) Benannte Vertragsstaaten:
**AT BE CH FR GB IT LI NL SE**

(56) Entgegenhaltungen:
**CH - A - 491 660**
**DE - A - 1 619 730**
**DE - A - 1 642 783**
**DE - A - 1 642 833**
**DE - A - 2 654 296**
**DE - B - 1 417 639**
**US - A - 3 650 905**

(73) Patentinhaber: **Akzo GmbH,**
**Postfach 10 01 49 Kasinostrasse 19-23,**
**D-5600 Wuppertal-1 (DE)**

(72) Erfinder: **Ostertag, Karl, Dr., Dipl.-Ing., Dr.**
**Jordanstrasse 2, D-8765 Erlenbach (DE)**

ACTORUM AG

## Beschreibung

Die Erfindung betrifft ein Verfahren und eine Vorrichtung zum wenigstens teilweisen Abtrennen mindestens eines flüssigen Bestandteiles einer Lösung durch Überführen desselben in die Dampfphase, bei welchem die Lösung und das Destillat durch eine poröse Trennwand voneinander getrennt gehalten werden, die nur für das dampfförmige Destillat und gegebenenfalls vorhandene Gase durchlässig ist und mit der die Lösung und das Destillat in Berührungskontakt gehalten werden, bei welchem das Überführen in die Dampfphase auf der Lösungsseite der Poren der porösen Trennwand erfolgt und das dampfförmige Destillat durch die Poren zur Destillatseite diffundiert.

Aus der US-A 3 361 645 ist eine Vorrichtung zur Gewinnung von Trinkwasser aus salzhaltigem Wasser bekannt, bei welcher Wasserdampf aus der Lösung durch wasserdampfdurchlässige Silikongummirohre in das Innere der Rohre diffundiert und von dort mit einem Schleppgas, beispielsweise Luft, zu einem Kondensator transportiert wird. Der Dampftransport mit Hilfe des Schleppgases wird dabei entweder durch ein Gebläse oder durch Anlegen von Vakuum bewirkt. Eine Kondensation des Wasserdampfes bereits im Innern der Rohre erfolgt dort also nicht. Das salzhaltige Wasser wird dabei auf eine Temperatur erwärmt, die zwischen der Umgebungstemperatur und der Siedetemperatur liegt.

Aus der DT-A 2 534 780 ist ein Verfahren zum Abtrennen von Phenolen aus wässrigen Gemischen mit einer organischen polymeren Membran, die selektiv für Phenole permeabel ist, bekannt, bei welchem der wässrige Beschickungsstrom entweder in der flüssigen oder in der Dampfphase mit der Membrane in Kontakt gebracht wird und das Permeat in Form eines Dampfes der Phenole, einer Lösung der Phenole oder als Phenolkomplexlösung vorliegen kann. Bei diesem bekannten Verfahren kann der absolute Druck an den Beschickungs- und Permeatzonen beträchtlich variieren, d.h. es können Unter- und Überdrücke von wenigen Torr bis zu Grössen von 35–75 kg/cm² oder höher verwendet werden. Nach der Lehre der genannten Druckschrift ist der Druck im allgemeinen kein wesentlicher Faktor, wenn die Permeatzone Flüssigphasenbedingungen unterliegt. Wenn jedoch Dampfbeschickungsgemische oder Membranverdampfungsbedingungen verwendet werden, können höhere Drücke an der Beschickungszone ein höheres chemisches Potential bilden, wobei dies wünschenswert ist. Liegt bei diesem bekannten Verfahren das Permeat in der Dampfphase vor, so wird auf der Beschickungsseite der Membran gewöhnlich ein Überdruck und auf der Permeatseite ein Unterdruck im Verhältnis zum atmosphärischen Druck eingestellt.

Aus der DT-A 1 619 749 ist ein Verfahren zur Auftrennung flüssiger Lösungen und Mischungen unter Verwendung poröser, mit der Flüssigkeit in Berührung stehender Körper, beispielsweise einer lyophoben porösen Folie, bekannt, bei welchem auch unter Unterdruck gearbeitet werden kann, da dabei dann wesentlich kleinere Wärmemengen benötigt werden, um die gleiche Wirkung wie beim Arbeiten unter Normal- oder Überdruck zu erreichen.

Die mit diesen bekannten Verfahren erreichten Permeatflüsse hielt man bisher für das maximal Erreichbare. Es wurde nun aber überraschend gefunden, dass bei Verfahren der genannten Art in Wirklichkeit wesentlich höhere Permeatflüsse (das ist die pro Zeiteinheit und pro Flächeneinheit wirksamer poröser Trennwand von der Lösungsseite durch die Poren der porösen Trennwand zur Destillatseite hindurchdiffundierende Destillatmenge) erreicht werden können, als bisher angenommen und erreicht wurde.

Der vorliegenden Erfindung liegt also die Aufgabe zugrunde, das gattungsgemässe Verfahren dahingehend zu verbessern, dass die pro Flächeneinheit poröser Trennwand und pro Zeiteinheit erhaltene Destillat- bzw. Kondensatmenge wesentlich grösser ist, als die mit diesem Verfahren bisher erreichte.

Diese Aufgabe wird bei dem gattungsgemässen Verfahren erfindungsgemäss dadurch gelöst, dass während der Dauer des Abtrennvorganges durch Druck- und/oder Temperatursteuerung stets wenigstens in einem Teilbereich der unmittelbaren Umgebung der porösen Trennwand auf der Lösungsseite die absolute Temperatur der Lösung auf höchstens 3% unterhalb der dem herrschenden Druck entsprechenden Siedetemperatur eingestellt wird und dass auf der Destillatseite weder mit einem Gas noch mit einem Schleppgas gearbeitet wird.

Die treibende Kraft beim erfindungsgemässen Membrandestillationsverfahren ist die Dampfdruckdifferenz zwischen der Lösungsseite und der Destillatseite. Eine solche Dampfdruckdifferenz wird dadurch erreicht, dass entweder das Destillat in dampfförmigem Zustand fortlaufend von der porösen Trennwand fortgeführt wird oder die Destillatseite der porösen Trennwand ständig mit einer Flüssigkeit beaufschlagt wird, die eine niedrigere Temperatur als die Lösung hat und die das dann auf der Destillatseite der Poren der porösen Trennwand kondensierende Destillat aufnimmt, also durch eine Temperaturdifferenz zwischen der Lösung und dem Kondensat. Vorzugsweise besteht diese Kühl- oder Schleppflüssigkeit aus kondensiertem gekühlten Destillat selbst. Auf diese Weise wird ein Vermischen des Destillats mit einer anderen Flüssigkeit vermieden. Dies ist insbesondere dann von grossem Vorteil, wenn das Destillat selbst das eigentliche Verfahrenserzeugnis ist und nicht wie ein Abfallprodukt behandelt werden darf.

Es muss nun aber als völlig überraschend angesehen werden, dass bei gleichem Dampfdruckgefälle zwischen der Lösungsseite und der Destillatseite die transmembrane Destillatdurchflussmenge um ein Vielfaches beispielsweise allein dadurch gesteigert werden kann, dass auf der Lösungsseite ein Unterdruck im Vergleich zum Umgebungsdruck erzeugt wird, und dass es ausreicht, wenn durch eine solche Druckabsenkung erfindungsgemäss wenigstens in einem Teilbereich der unmittelbaren Umgebung der porösen Trennwand in der Lösung zumindest der Bereich des jeweiligen Siedepunktes der Lösung erreicht wird.

Unter «jeweiliger Siedepunkt» wird hier der vom Druck, von der Temperatur und von der Konzentration der Lösung abhängige Siedepunkt der Lösung verstanden. Dieser ändert sich im allgemeinen ständig. Auch der Ort, an dem der jeweilige Siedepunkt bzw. sein Bereich erreicht wird, kann wechseln. Vorzugsweise wird der Druckverlauf bzw. der Temperaturverlauf auf der Lösungsseite so gesteuert, dass überall auf der Lösungsseite zumindest der Bereich des jeweiligen Siedepunktes der Lösung erreicht wird, wenigstens aber entlang der gesamten porösen Trennwand. Unter Bereich des jeweiligen Siedepunktes wird erfindungsgemäss verstanden, dass die absolute Temperatur der Lösung höchstens 3% unterhalb der dem an der betreffenden Messstelle herrschenden Druck entsprechenden Siedetemperatur, ausgedrückt in Kelvin, liegt, oder anders ausgedrückt, dass die Temperatur T der Lösung mindestens $0{,}97 \cdot T_s$ beträgt, wobei $T_s$ die Siedetemperatur der Lösung an der betreffenden Messstelle ist.

Das erfindungsgemässe Verfahren ist nicht mit den gattungsfremden Vakuumeindampf- oder -destillationsverfahren zu vergleichen, bei denen das Verdampfen stets in die Richtung erfolgt, in der sich die das Vakuum erzeugende Einrichtung befindet. Beim erfindungsgemässen Verfahren findet eine Erhöhung der durch die Poren der porösen Trennwand zur Destillatseite hindurchdiffundierenden Destillatmenge nämlich auch dann statt, wenn nur auf der Lösungsseite ein Unterdruck, insbesondere der Siededruck eingestellt wird, indem beispielsweise der Dampfraum oberhalb der Lösung mit einer Vakuumeinrichtung verbunden wird. Ein weiterer entscheidender Unterschied zwischen diesen mit Vakuum arbeitenden gattungsfremden Verfahren und dem erfindungsgemässen Verfahren besteht darin, dass beim erfindungsgemässen Verfahren der Übergang des abzutrennenden flüssigen Bestandteils der Lösung aus der flüssigen Phase in die Dampfphase an Flüssigkeitsoberflächen stattfindet, die in die Poren einer porösen Trennwand hineinragen und somit Kapillarkräften ausgesetzt sind. Auch im Ergebnis unterscheidet sich das erfindungsgemässe Verfahren erheblich von den genannten gattungsfemden Verfahren, da die mit dem erfindungsgemässen Verfahren erhältlichen Destillate (Kondensate) einen Reinheitsgrad aufweisen, wie er mit jenen bei nur einer einzigen Verdampfungsstufe, also beispielsweise ohne anschliessende Rektifikation oder weitere Destillation, nicht erreicht wird.

Bekanntlich ist der Siedepunkt einer Flüssigkeit erst dann erreicht, wenn der Dampfdruck der Flüssigkeit gleich dem Umgebungsdruck ist. Der Dampfdruck einer Flüssigkeit steigt mit steigender Temperatur der Flüssigkeit. Bei vorgegebenem Umgebungsdruck lässt sich der Siedepunkt also durch Erhöhen der Temperatur der Flüssigkeit erreichen; bei vorgegebener Temperatur durch Absenken des Umgebungsdruckes. Bei einer ruhenden Flüssigkeitssäule ist der statische Druck im unteren Bereich der Säule höher als an der Oberfläche, so dass demzufolge im unteren Bereich der Säule der Siedepunkt erst bei einer höheren Temperatur erreicht wird als an der Oberfläche. Verbindet man eine Flüssigkeitssäule mit einer Unterdruckquelle, so wird – gleichmässige Temperaturverteilung in der Flüssigkeitssäule vorausgesetzt – bei Erreichen eines bestimmten Unterdruckes an der Oberfläche der Flüssigkeitssäule der Siedepunkt erreicht, nicht dagegen in den darunterliegenden Bereichen. Das bedeutet, dass man durch blosses Anlegen von Unterdruck oberhalb einer Flüssigkeitssäule bei gleichmässiger Temperaturverteilung nicht in der gesamten Säule Siedezustand erreicht. Beispielsweise ist der Druck in einer 10 m hohen Wassersäule an der tiefsten Stelle 0,981 bar höher als an der höchsten Stelle. Steht eine 10 m hohe Wassersäule unter Atmosphärendruck, so erhöht sich hierdurch die Siedetemperatur an der tiefsten Stelle der Wassersäule auf ca. 120°C. Steht eine solche Wassersäule in Kontakt mit einer senkrecht angeordneten ebenfalls 10 m hohen hydrophoben porösen Trennwand und bringt man diese Wassersäule durch Temperaturerhöhung oder durch Absenken des Umgebungsdruckes zum Sieden, so sind die für einen möglichst hohen Dampffluss durch die poröse Trennwand notwendigen Voraussetzungen somit nur im oberen Bereich der Wassersäule erfüllt.

Beim erfindungsgemässen Verfahren besteht dieser Nachteil nicht, da hier durch Steuerung der Temperatur der Lösung und/oder des Druckes auf der Lösungsseite und/oder auf der Destillatseite zumindest in unmittelbarer Nähe möglichst der gesamten porösen Trennwand wenigstens auf der Lösungsseite der Siedepunkt zumindest annähernd erreicht wird. Dies kann bei einer senkrecht angeordneten beispielsweise 10 m hohen porösen Trennwand beispielsweise in der Weise erfolgen, dass die Lösung von unten nach oben an der porösen Trennwand entlanggeleitet wird, wobei sie die dem Druck entsprechende Siedetemperatur bereits hat, wenn sie an die poröse Trennwand herangeführt wird, und sich auf ihrem Weg von unten nach oben derart abkühlt, dass stets die dem örtlichen Druck entsprechende Siedetemperatur erreicht wird. Eine Abkühlung findet dabei in jedem Fall durch die durch poröse Trennwand erfolgende Verdampfung statt. Ist diese zu stark, so dass die Temperatur in der Lösung unter die dem jeweiligen (niveauabhängigen) Druck entsprechende Siedetemperatur absinkt, so kann dem durch Zufuhr von Wärme an entsprechender Stelle oder durch Erhöhung der Durchflussmenge der Lösung entgegengewirkt werden. Ist die Verdampfungsmenge im Vergleich zur Durchflussmenge an Lösung dagegen zu gering, so wird die Lösung bei Erreichen einer bestimmten Höhe unter starker Dampfblasenbildung intensiv zu sieden (auch kochen genannt) beginnen. Dies kann beispielsweise durch Verringerung der auf der Lösungsseite an der porösen Trennwand entlanggeführten Durchflussmenge vermieden werden.

In gleicher Weise wie durch Veränderung der Durchflussmengen können auch durch den Einbau zusätzlicher Strömungswiderstände die Druckverhältnisse den gegebenenfalls vorgegebenen Temperaturverhältnissen angepasst werden.

Das gleiche gilt für den Fall, dass die Lösung im wesentlichen horizontal an der dann ebenfalls horizontal angeordneten porösen Trennwand entlanggeleitet wird. In diesem Fall werden nämlich im wesentlichen lediglich die auftretenden gegebenenfalls nur sehr geringen Druckverluste (Strömungsverluste) zu Druckunterschieden in der Lösung entlang der porösen Trennwand und damit zu nur geringfügig unterschiedlichen Siedetemperaturen führen. Ist der nur durch Strömungsverluste erzielbare Druckunterschied entlang einer horizontal angeordneten porösen Trennwand im Vergleich zu der aufgrund der durch die poröse Trennwand erfolgenden Verdampfung und aufgrund gegebenenfalls auftretender Wärmeverluste bewirkten Abnahme der Temperatur der Lösung zu gering, so kann der Siedepunkt in der Lösung nicht entlang der gesamten porösen Trennwand erreicht bzw. aufrechterhalten werden. Auch in diesem Fall können durch Wärmezufuhr von aussen, durch Erhöhung der Durchflussmenge auf der Lösungsseite oder durch den Einbau künstlicher Strömungswiderstände die Temperaturabnahme in der Lösung und der Druckverlauf in der Lösung so aufeinander abgestimmt werden, dass wenigstens in einem Teilbereich der jeweilige Siedepunkt der Lösung, zumindest dessen Bereich, erreicht wird.

Wird die poröse Trennwand beispielsweise durch ein oder mehrere Rohre gebildet, so lässt sich der Strömungswiderstand in den Rohren beispielsweise dadurch erhöhen, dass der Innendurchmesser der Rohre entsprechend klein bemessen wird, oder auch dadurch, dass die Rohre mit Füllkörpern gefüllt werden. Diese Massnahme kann darüber hinaus noch zu weiteren Vorteilen führen, indem beispielsweise die Verweilzeit der durch die Rohre strömenden Flüssigkeit in den Rohren hierdurch verringert wird, bei geringen Durchflussmengen zumindest eine quasi turbulente Strömung in den Rohren erreicht wird, störende Grenzschichten an den Rohrinnenwänden leichter zerstört werden usw. Zum gleichen Zweck kann auch der solche als poröse Trennwand wirkende Rohre umgebende Raum mit Füllkörpern gefüllt werden.

Bei der Frage, welche Art der Steuerung die geeignetere ist, ist zu berücksichtigen, dass bei höheren Temperaturen auf der Lösungsseite im allgemeinen höhere Verdampfungsmengen erzielt werden. Ist eine Wärmezufuhr gleichzeitig mit dem Überfüllen mindestens eines flüssigen Bestandteils der Lösung in die Dampfphase jedoch nicht oder nur in beschränktem Umfang möglich, so kann durch die oben beschriebene (Unter-)Drucksteuerung auf der Lösungsseite auch ohne gleichzeitige Wärmezufuhr in der Lösung der Siedepunkt erreicht und aufrechterhalten werden.

Die oben beschriebenen Möglichkeiten, durch Druck- und Temperatursteuerung auf der Lösungsseite möglichst entlang der gesamten porösen Trennwand die Lösung erfindungsgemäss zumindest möglichst nahe am Siedepunkt zu halten, lassen sich mit Hilfe üblicher Mess- und Regeleinrichtungen zur Steuerung des Druckes und der Temperatur auf der Lösungsseite sowie der Durchflussmenge an Lösung verwirklichen. Vorzugsweise werden auch die Temperaturen, Drücke und Durchflussmengen auf der Destillatseite mit entsprechenden Einrichtungen geregelt. Unter bestimmten, nachfolgend näher beschriebenen Umständen kann auf die oben beschriebene, zum Erreichen des Siedepunktes in der Lösung aufeinander abgestimmte Druck-Temperatur-Regelung verzichtet werden und trotzdem ein demgegenüber allenfalls nur geringfügig kleinerer Destillatfluss erreicht werden.

Es wurde nämlich überraschend gefunden, dass unter bestimmten Voraussetzungen eine – ausgehend von den bisher bekannten Verfahren – erhebliche Steigerung der Destillatmenge allein dadurch erreicht werden kann, dass der zum Herbeiführen des Siedepunktes erforderliche Druck (Unterdurck) nur in den Poren der porösen Trennwand erzeugt wird. Dies kann beispielsweise auf einfache Weise dadurch bewirkt werden, dass nur die poröse Trennwand unmittelbar mit einer Druck (Unterdruck) erzeugenden Einrichtung verbunden wird. Hierdurch kann also, selbst wenn die Lösung und das Destillat (Kondensat) beispielsweise unter Atmosphärendruck stehen und beide eine Temperatur unterhalb der dabei üblichen Siedetemperatur aufweisen, trotzdem bei entsprechend bemessenem Druck (Unterdruck) in den Poren der porösen Trennwand in unmittelbarer Umgebung der porösen Trennwand in der Lösung zumindest annähernd der Siedepunkt erreicht werden.

Häufig ist diese Ausführungsform des erfindungsgemässen Verfahrens bereits so wirkungsvoll, dass auf das zusätzliche Erzeugen des entsprechenden Siededruckes (Unterdruckes) auf der Lösungsseite verzichtet werden kann. Deshalb stellt diese Verfahrensweise auch eine ganz besonders bevorzugte Ausführungsform des erfindungsgemässen Verfahrens dar.

Je nach Grösse und Art der porösen Trennwand kann es zweckmässig sein, die poröse Trennwand an mehreren Stellen mit der den (Unter-)Druck erzeugenden Einrichtung zu verbinden.

Das Erzeugen des dem der Temperatur der Lösung entsprechenden Dampfdruckes in den Poren der porösen Trennwand auf die zuvor beschriebene Art und Weise, ist dann möglich, wenn die poröse Trennwand netzartig aufgebaut ist, d.h. wenn ein Porensystem vorliegt, bei dem die Poren durch gas- bzw. dampfdurchlässige Öffnungen, Kanäle, Poren usw. miteinander in Verbindung stehen. Besonders wirkungsvoll kann diese Ausführungsform des erfindungsgemässen Verfahrens dann durchgeführt werden, wenn die poröse Trennwand in Form eines mikroporösen zellförmigen Körpers aus einem thermoplastischen Polymer ausgewählt aus der Gruppe der olefinischen Polymeren, Kondensationspolymeren und Oxydationspolymeren oder Mischungen davon vorliegt, der eine isotrope Struktur mit einer Vielzahl von sphärischen Zellen, die gleichmässig in der ganzen Struktur verteilt sind, aufweist, wobei die angrenzenden Zellen untereinander durch Poren verbunden sind, die einen kleineren Durchmesser aufweisen als die besagten Zellen. Vorzugsweise haben die sphärischen Zellen eines solchen mikroporösen zellförmigen Körpers einen mittleren Durchmesser C von 0,5 bis 100 µm, beträgt der Schärfefaktor S 1–30 und beträgt das Verhältnis der durchschnittlichen Zellgrösse zum durchschnittlichen Durchmesser P der die Zellen verbindenden Poren C/P 2:1 bis 200:1, ist log C/P 0,2 bis 2,4 und ist log S/C –1,4 bis 1. Der Schärfefaktor «S» (S-Faktor) wird hierbei durch Analyse einer Quecksilber-Intrusionskurve bestimmt. Ein solcher mikroporöser zellförmiger Körper, der zur Durchführung des erfindungsgemässen Verfahrens in Form wenigstens einer flachen Trennwand, einer flachen Membran, eines Rohres, eines Schlauches oder eines Hohlfadens vorliegen kann, sowie ein Verfahren zu seiner Herstellung, sind aus der DE-A 2 737 745 bekannt. In dieser Druckschrift wird auch die Ermittlung des S-Faktors beschrieben (Seite 53).

Weitere zur Durchführung des erfindungsgemässen Verfahrens als poröse Trennwand geeignete Körper, die aufgrund ihrer besonderen Porenstruktur insbesondere für die zuletzt beschriebene Ausführungsform des erfindungsgemässen Verfahrens geeignet sind, bei welcher nur in den Poren der porösen Trennwand ein Druck eingestellt wird, der weitestgehend dem Dampfdruck der Lösung entspricht, und Verfahren zu ihrer Herstellung sind aus der DE-A 2 833 493, DE-A 2 833 623 und der DE-A 3 049 557 bekannt.

Eine poröse Trennwand aus beispielsweise biaxial verstrecktem Polytetrafluoräthylen (PTE) ist zur Durchführung des erfindungsgemässen Verfahrens nur begrenzt geeignet, und zwar insofern, als die hier zuletzt beschriebene Ausführungsform des erfindungsgemässen Verfahrens hiermit nicht, allenfalls mit geringem Erfolg durchführbar ist. Dies liegt an der anders gearteten Form und Anordnung der Poren und dem unterschiedlichen Aufbau dieses porösen Werkstoffes.

Das erfindungsgemässe Verfahren kann so durchgeführt werden, dass auf der Lösungsseite, in den Poren der porösen Trennwand bzw. auf der Destillatseite (Kondensatseite) Drücke herrschen, die gleich, grösser oder kleiner als der Atmosphärendruck sind, wobei im allgemeinen örtlich unterschiedliche Drücke herrschen. Das bedeutet, dass beispielsweise auf der Lösungsseite ein Druck eingestellt wird, der über dem Atmosphärendruck und dem Dampfdruck der Lösung liegt, dass in den Poren der porösen Trennwand – unter den oben beschriebenen Voraussetzungen – ein Druck eingestellt wird, der weitestgehend dem Dampfdruck der Lösung entspricht, wobei auch dieser höher sein kann als der Atmosphärendruck, und dass auf der Destillatseite ein Druck eingestellt wird, der höher ist als der Druck auf der Lösungsseite, wobei zur Aufrechterhaltung des erforderlichen Dampfdruckgefälles die (örtliche) Temperatur des Destillates (Kondensates) niedriger sein muss, als die (örtliche) Temperatur der Lösung. Auch bei dieser Ausführungsform des erfindungsgemässen Verfahrens wird in unmittelbarer Umgebung der porösen Trennwand in der Lösung zumindest annähernd der Siedepunkt erreicht, so wie dies bereits oben für den Fall beschrieben wurde, dass die Lösung unter Atmosphärendruck steht und in den Poren der porösen Trennwand ein Unterdruck eingestellt wird, der weitestgehend dem Dampfdruck der Lösung entspricht.

Eine wichtige Voraussetzung für das Erzielen hoher Permeatflüsse ist, dass beim erfindungsgemässen Verfahren auf der Destillatseite nicht mit einem Schleppgas gearbeitet wird, denn es hat sich gezeigt, dass die für das erfindungsgemässe Verfahren charakteristischen hohen Destillatflüsse bei Anwesenheit eines Schlepp- oder Fremdgases nicht erreicht werden.

Die mit dem erfindungsgemässen Verfahren gegenüber den bisher bekannten Verfahren erreichbare Leistungssteigerung, d.h. die pro Flächeneinheit Membranoberfläche und Zeiteinheit bei sonst gleichen Bedingungen erzielbare Erhöhung der durch die poröse Trennwand hindurchdiffundierenden Destillatmenge, beträgt häufig mehr als das Siebenfache.

Die Kondensation des aus der Lösung durch die poröse Trennwand hindurchtretenden Dampfes kann unmittelbar an der der Destillatseite zugewandten Oberfläche der porösen Trennwand erfolgen, so dass das hierbei entstehende flüssige Kondensat in Berührungskontakt mit der porösen Trennwand steht. Es ist jedoch auch möglich, das Destillat zunächst dampfförmig von der porösen Trennwand wegzuleiten und an anderer Stelle zu kondensieren, so dass das flüssige Destillat (Kondensat) mit der porösen Trennwand nicht in Berührung kommt. Diese Art des Kondensierens kann in einem üblichen Kondensator erfolgen, wobei zur Unterstützung des Wegführens des dampfförmigen Destillats zu einem solchen Kondensator ein durch eine Unterdruckquelle, z.B. Vakuumpumpe, erzeugtes Druckgefälle im allgemeinen besonders wirkungsvoll ist. Anstelle der üblichen Kondensation kann auch die an sich bekannte Brüdenverdichtung angewandt werden, wodurch der energetische Wirkungsgrad des erfindungsgemässen Verfahrens noch beträchtlich erhöht werden kann; beispielsweise die mechanische Brüdenverdichtung mit Rotationskolbenverdichtern oder Radialgebläsen.

Wenn das Destillat in dampfförmigen Zustand von der porösen Trennwand weggeführt werden soll, so muss dies ohne ein Schleppgas erfolgen, oder wenn die Kondensation des Destillates an einer der porösen Trennwand gegenüberliegenden Kondensationsfläche erfolgen soll, so darf der dazwischenliegende mit Destillatdampf gefüllte Zwischenraum nicht zusätzlich auch noch ein Gas enthalten, das bei den gegebenen Temperatur- und Druckverhältnissen nicht kondensiert.

Das erfindungsgemässe Verfahren ist nicht nur zur Behandlung sogenannter echter Lösungen wie Salzwasser, Säuren od. dgl. geeignet, sondern auch für Flüssigkeitsgemische und solche Flüssigkeiten, die organische oder anorganische Teilchen in ungelöster Form, auch im submikroskopischen Bereich, Mikroorganismen u. dgl. enthalten, sowie für Extrakte, Emulsionen u. dgl. Alle Flüssigkeiten, bei denen mit dem erfindungsgemäss beschriebenen Verfahren wenigstens ein teilweises Abtrennen wenigstens eines flüssigen Bestandteiles dieser Flüssigkeit erfolgt, gelten danach als Lösungen im Sinne der vorliegenden Erfindung. Das bedeutet, dass das gewünschte Produkt nicht immer nur das kondensierte Destillat zu sein braucht, sondern auch die aufkonzentrierte Lösung sein kann oder aber auch beide sein können.

Der Siedepunkt von Lösungen ist häufig ein anderer als der des reinen Lösungsmittels bzw. der verschiedenen flüssigen Mischungskomponenten in reiner Form. Häufig ändert sich aus diesem Grund der von der Konzentration abhängige Siedepunkt der Lösung während der Durchführung des erfindungsgemässen Verfahrens, was bei der Druck- bzw. Temperatursteuerung zu berücksichtigen ist.

Die poröse Trennwand kann aus solchen porösen oder mikroporösen Materialien bestehen, die die Eigenschaft besitzen, nur für den Dampf, nicht dagegen für die Lösung bzw. das Kondensat durchlässig zu sein.

Poröse Trennwände, die sich als zur Durchführung des erfindungsgemässen Verfahrens geeignet erwiesen haben, und die auch als Membran vorliegen können, bestehen aus Nylon, Zelluloseacetat, Polypropylen, Polytetrafluoräthylen, Polyäthylen, Polyvinylidenfluorid, Polyvinylchlorid, Zellulose, Asbest, Silicaten, Mineralstoffen oder Mischungen daraus.

Vorzugsweise sind diese Materialien durch keine der beiden Flüssigkeiten benetzbar. Diese Eigenschaft der porösen Trennwand braucht im allgemeinen nur bei den Bedingungen vorzuliegen, bei denen das erfindungsgemässe Verfahren durchgeführt wird; sie wird gegebenenfalls erst durch entsprechendes Vorbehandeln der porösen Trennwand erreicht.

Überraschenderweise kann das erfindungsgemässe Verfahren mit grossem Erfolg, teilweise sogar mit solchen Lösungen durchgeführt werden, bei denen die Lösung, nicht aber das Kondensat bei Atmosphärendruck zu einer Benetzung der porösen Trennwand führt, indem hierbei nur auf der Lösungsseite der dem Dampfdruck der Lösung entsprechende Unterdruck eingestellt wird.

Die poröse Trennwand kann in ebener oder nichtebener, beispielsweise gewölbter, gewellter oder geschlossener Form vorliegen, also beispielsweise als Flachmembran (Flachfolie), Schlauchmembran (Schlauchfolie), Rohr oder Hohlfaden bzw. Hohlfaser.

Zur Druckführung des erfindungsgemässen Verfahrens wird als poröse Trennwand im allgemeinen eine künstlich hergestellte poröse oder mikroporöse Membran bevorzugt.

In weiterer vorteilhafter Ausgestaltung des erfindungsgemässen Verfahrens strömt die Lösung und/oder das Kondensat an der porösen Trennwand entlang, indem die vorhandene Lösungsmenge und/oder Kondensatmenge oder auch nur ein Teil davon durch natürliche Konvektion oder zwangsweise, beispielsweise durch natürliches Druckgefälle oder an sich bekannte Fördermittel wie Pumpen usw., einmal oder mehrmals an der porösen Trennwand entlang bewegt wird. Dabei können die Lösung und das Kondensat im Gleich-, Gegen-, Kreuz- oder jedem beliebigen Mischstrom zueinander fliessen.

Die gegebenenfalls notwendige Aufheizung oder Kühlung der Lösung und/oder des Kondensates kann im unmittelbaren Bereich der porösen Trennwand oder aber in hiervon getrennten Verfahrensstufen erfolgen. Eine wenigstens teilweise Rückgewinnung der durch die Kondensation des Destillatdampfes und durch Wärmeübertragung durch die poröse Trennwand aus der Lösung ins Kondensat übertragenen Wärmemenge ist auch noch durch andere als die bereits oben genannten Massnahmen und Mittel möglich und gegebenenfalls vorteilhaft, so beispielsweise durch den Einsatz von Wärmepumpen.

Das erfindungsgemässe Verfahren kann ein- oder mehrstufig durchgeführt werden; d.h. die Lösung kann nacheinander an verschiedenen gegebenenfalls auch unterschiedlichen porösen Trennwänden entlanggeleitet und dabei schrittweise aufkonzentriert werden und/oder das kondensierte Destillat einer vorgeschalteten Stufe kann als Lösung einer nachgeschalteten Stufe eingesetzt werden, wenn auf diese Weise ein noch reineres Destillat als bei einstufiger Fahrweise erhalten wird.

Das erfindungsgemässe Verfahren kann darüber hinaus auch als Vor-, Zwischen- oder Endstufe eines mehrstufigen Verfahrens eingesetzt werden, bei dem, aus was für Gründen auch immer, andere Destillations-, Eindampf- oder dergleichen Verfahren vor- oder nachgeschaltet sind.

Bei höheren Temperaturen auf der Lösungsseite bzw. höheren Temperaturdifferenzen zwischen der Lösung und dem Kondensat ist aufgrund des dabei herrschenden höheren Dampfdruckgefälles die durch die poröse Trennwand hindurchtretende Destillatmenge höher als bei niedrigeren Temperaturen bzw. Temperaturdifferenzen, auch wenn in der Lösung der Siedepunkt noch nicht erreicht ist. Aus diesem Grunde bewirkt eine Druckabsenkung auf der Lösungsseite oder in den Poren der porösen Trennwand bis zum Erreichen des Siedepunktes in jenen Fällen eine weniger starke Erhöhung der Destillatmenge. Bei wässrigen Lösungen und Wasser als Kondensat und einer Temperatur in der Lösung von beispielsweise nur 25°C und einer Temperatur im Kondensat von beispielsweise 14°C dagegen beträgt die Destillatmenge beim erfindungsgemässen Verfahren mehr als das 7,5-fache verglichen mit einer Fahrweise bei Atmosphärendruck, z.B. bei 23%-iger NaCl-Lösung.

Zum Erreichen des Siedepunktes in der Lösung wenigstens in unmittelbarer Nähe der porösen Trennwand ist es im allgemeinen nicht unbedingt erforderlich, auch auf der Destillatseite, wenn dort das Destillat in flüssiger Form, also als Kondensat, vorliegt, Unterdruck zu erzeugen. Wird dies jedoch aus anderen Gründen gewünscht, so hat es sich als vorteilhaft erwiesen, auf der Kondensatseite einen höheren hydrostatischen Druck einzustellen als auf der Lösungsseite, um zu verhindern, dass bei einem plötzlich auftretenden Leck in der porösen Trennwand Lösung in das Kondensat gelangt, wenn das Kondensat in reinster Form gewonnen werden soll.

Ein durch diese Massnahme bei einem solchen Leck auftretender Leckstrom von der Kondensatseite zur Lösungsseite (Rückstrom) reduziert zwar die erhältliche Destillatmenge, stört das Verfahren bis zu einer gewissen Grenze im allgemeinen jedoch nicht, da das Kondensat für die Lösung nichts Artfremdes darstellt.

Andererseits kann eine Differenz zwischen dem hydrostatischen Druck auf der Lösungsseite und dem auf der Kondensatseite zu einer mechanischen Verformung oder sogar zum Bruch der porösen Trennwand führen. Dies kann insbesondere dann eintreten, wenn die poröse Trennwand in Form einer oder mehrerer sehr dünner Membranen vorliegt. Zur Vermeidung solcher durch hydrostatische Druckdifferenz bewirkter unerwünschter Verformungen der porösen Trennwand können übliche Mittel und Massnahmen zur Abstützung oder Verstärkung der porösen Trennwand angewandt werden, durch die jedoch keine, höchstens jedoch keine nennenswerte Beeinträchtigung der spezifischen Verdampfungsleistung der porösen Trennwand erfolgen sollte. In vielen Fällen hat es sich dabei jedoch als weitaus vorteilhafter erwiesen, den hydrostatischen Druck (Unterdruck) auf beiden Seiten der porösen Trennwand auf etwa das gleiche niedrige Niveau einzustellen, so dass die auf die poröse Trennwand wirksam werdende hydrostatische Druckdifferenz praktisch Null oder annähernd Null wird, wobei im Sinne der vorliegenden Erfindung die hydrostatischen Drücke dann als etwa gleich bezeichnet werden, wenn die Differenz zwischen beiden im Bereich von 0 bis 10% des niedrigeren der beiden liegt.

Aufgrund des hohen Reinheitsgrades des mit dem erfindungsgemässen Verfahren erhältlichen Destillates, des guten thermischen Wirkungsgrades und der Tatsache, dass das erfindungsgemässe Verfahren auch bei niedrigen Temperaturen im Siedebereich durchgeführt werden kann, ist es beispielsweise zur Gewinnung von Trinkwasser und selbst von Kesselspeisewasser (vollentsalztem Wasser) sogar aus Salzwasser hervorragend geeignet, so dass sich sein Einsatz auch auf Schiffen anbietet. Weitere Bereiche, in denen das erfindungsgemässe Verfahren mit Vorteil einsetzbar ist, sind das Aufbereiten galvanischer Abwässer auch als Vorstufe zur Metallrückgewinnung, das Aufkonzentrieren von Natronlauge, Fruchtsäften, den zuckerhaltigen Säften bei der Zuckergewinnung, von Milch u. dgl., das Aufbereiten von Molke, die Herstellung von sterilem Wasser für und in Labors, die Vorbehandlung oder Herstellung pharmazeutischer Produkte, die Gewinnung von Trinkwasser aus Urin bei der Raumfahrt, die Eindampfung von Spinnbädern, beispielsweise in Rayonspinnereien, und andere vergleichbare Verfahren.

Die erfindungsgemässe Vorrichtung, die zum Durchführen des erfindungsgemässen Verfahrens geeignet ist, besteht im wesentlichen aus wenigstens einem Behälter, der durch wenigstens eine poröse Trennwand in wenigstens zwei Kammern unterteilt ist, wovon die eine Kammer zur Aufnahme der Lösung und die andere Kammer zur Aufnahme des Destillats oder des Kondensats bestimmt ist, wobei erfindungsgemäss die Kammer zur Aufnahme der Lösung und/oder die Kammer zur Aufnahme des Destillats und/oder die poröse Trennwand Mittel aufweist (aufweisen), mit denen jedes der genannten Teile an eine Einrichtung zur Erzeugung von Unterdruck (Vakuum) oder Überdruck anschliessbar ist.

Zumindest die erfindungsgemäss mit Unterdruck oder Überdruck betriebenen Teile der erfindungsgemässen Vorrichtung sind in nach aussen geschlossener Bauform ausgeführt.

Zum Erzeugen des erfindungsgemäss vorgeschlagenen Unterdruckes zum Erreichen des Siedepunktes bei niedrigen Temperaturen kann der Behälter mit den beiden Kammern auch barometrisch aufgestellt und angeschlossen sein. Das bedeutet, dass der Behälter auf einem dem gewünschten Siededruck entsprechenden Niveau angeordnet wird und die Zuführ- und Abführleitungen als Steig- bzw. Falleitungen ausgeführt sind, die in auf einem niedrigeren Niveau als der Behälter angeordnete mit Flüssigkeit (Lösung bzw. Kondensat) gefüllte Gefässe, sogenannte Tauchgefässe, münden, und zwar unterhalb der Flüssigkeitsoberfläche in diesen Gefässen, und somit einen sogenannten barometrischen Verschluss bilden.

Die Kammern sind dabei in nach aussen geschlossener Form auszubilden und können, beispielsweise auch nur zum Entlüften, wie auch die poröse Trennwand an eine gemeinsame oder eigene Unterdruck- oder Vakuumeinrichtung angeschlossen sein.

Die erfindungsgemässe Vorrichtung weist ferner die je nach Bedarf notwendigen und an sich üblichen Mess-, Regel- und Überwachungseinrichtungen auf, auf die jedoch nicht näher eingegangen wird, da sie dem Fachmann geläufig sind und sich bei Kenntnis der gestellten Anforderungen von selbst ergeben.

In weiterer Ausgestaltung besitzt die erfindungsgemässe Vorrichtung Fördermittel zum Zu- und Abführen der Lösung und/oder des Destillates bzw. Kondensates in die bzw. aus den betreffenden Kammern sowie gegebenenfalls Rückführleitungen mit entsprechenden Regelorganen, die ein mehrmaliges Umpumpen der Gesamtmenge oder auch nur eines Teilstromes der Lösung und/oder des Kondensates ermöglichen.

Weiterhin kann die erfindungsgemässe Vorrichtung Einrichtungen zum Aufheizen und/oder Kühlen der Lösung und/oder des Kondensates aufweisen, die je nach Bedarf oder Wunsch innerhalb oder ausserhalb der Kammern für die Lösung und das Destillat bzw. Kondensat angeordnet sein können.

Die erfindungsgemässe Vorrichtung kann weiterhin aus mehreren Kammern für die Lösung und/oder mehrere Kammern für das Destillat bzw. Kondensat bestehen, wobei die Kammern für die Lösung bzw. die Kammern für das Destillat bzw. Kondensat strömungstechnisch parallel oder in Reihe geschaltet sein können. Bei Reihenschaltung sowohl der Kammern für die Lösung als auch der Kammern für das Kondensat können die Lösung und das Kondensat vorzugsweise im Gegenstrom zueinander geführt werden, so dass sich, wenn keine Zwischenaufheizung oder Zwischenkühlung der beiden Flüssigkeiten erfolgt, in jedem Kammerpaar zwar ein unterschiedliches Temperaturniveau einstellt, falls gewünscht jedoch eine gleichgrosse oder aber nur geringfügig unterschiedliche Temperaturdifferenz zwischen Lösung und Kondensat einstellen lässt.

Soll das erfindungsgemässe Verfahren diskontinuierlich, also chargenweise, durchgeführt werden, so kann auf Umwälzpumpen u. dgl. verzichtet werden. Um die Lösung und das Kondensat hierbei aber trotzdem in Bewegung zu halten, können hierfür Rühr- oder Mischeinrichtungen vorgesehen werden. Auch Heiz- und Kühleinrichtungen können von Vorteil sein.

Werden so hohe Siedetemperaturen gewünscht, dass hierzu Überdrücke erforderlich werden, so können die Kammern mit entsprechend hohen Steigleitungen verbunden werden, so dass sich die gewünschten Überdrücke dann durch entsprechend hohe Flüssigkeitssäulen einstellen lassen. Das gleiche lässt sich auch ohne Steigleitungen mit Hilfe eines Gaspolsters erreichen oder mit Hilfe entsprechend bemessener Umwälzpumpen und Drosselorgane. Bei Behältern in geschlossener Bauform stellt sich von selbst der der Temperatur der Flüssigkeit entsprechende Dampfdruck ein, der in Abwesenheit von Gasen dem Siededruck entspricht.

Vorzugsweise weist die erfindungsgemässe Vorrichtung eine poröse Trennwand auf, die netzartig aufgebaut ist, d.h. bei der die Poren, die auf der Lösungsseite und auf der Destillatseite münden und durchgehend geöffnet sind, so dass das dampfförmige Destillat von der Lösungsseite durch diese hindurch zur Destillatseite diffundieren kann, durch gas- bzw. dampfdurchlässige Öffnungen, Kanäle, Kapillaren, Poren u. dgl. Querverbindungen miteinander verbunden sind, so wie sie weiter oben bei der allgemeinen Beschreibung des erfindungsgemässen Verfahrens bereits ausführlich beschrieben ist.

Sind in der Lösung Gase gelöst, so kann es zweckmässig sein, die Lösung bereits bevor sie mit der porösen Trennwand in Kontakt gebracht wird, in an sich bekannter Weise zu entgasen. Dies kann insbesondere dann von Vorteil sein, wenn der Siedepunkt in der Lösung erst im Bereich der porösen Trennwand und nicht schon vorher erreicht wird. Zu diesem Zweck ist eine entsprechende Entgasungseinrichtung vor der Kammer zur Aufnahme der Lösung vorzusehen.

Weist die erfindungsgemässe Vorrichtung eine netzartig aufgebaute poröse Trennwand auf, die zum Einstellen eines dem jeweiligen Dampfdruck der Lösung weitestgehend entsprechenden Druckes in ihren Poren geeignet ist, so ist vorzugsweise zumindest diese an eine Unter- oder Überdruckeinrichtung angeschlossen.

Die Erfindung sowie damit erzielbare Ergebnisse werden nunmehr anhand von Ausführungsbeispielen für die erfindungsgemässe Vorrichtung und das erfindungsgemässe Verfahren in Form von zeichnerischen und graphischen Darstellungen näher erläutert.

In den Figuren 1 bis 10 sind in vereinfachter schematischer Darstellungsweise teilweise als Schnittzeichnung oder auch nur ausschnittsweise Ausführungsformen der erfindungsgemässen Vorrichtung und verschiedene Messanordnungen dargestellt.

In den Figuren 11 bis 18 sind Messergebnisse graphisch dargestellt. Im einzelnen zeigt:

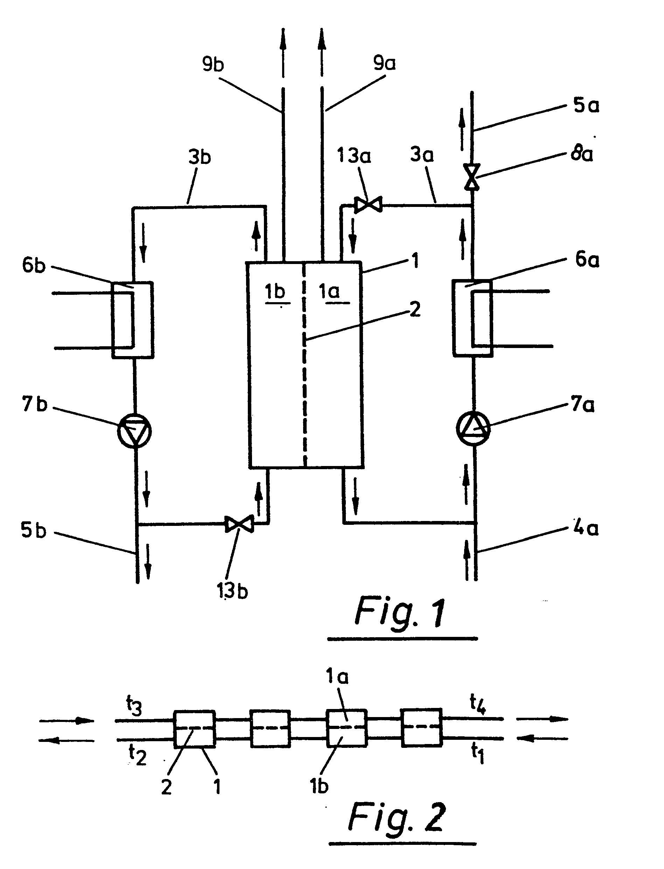

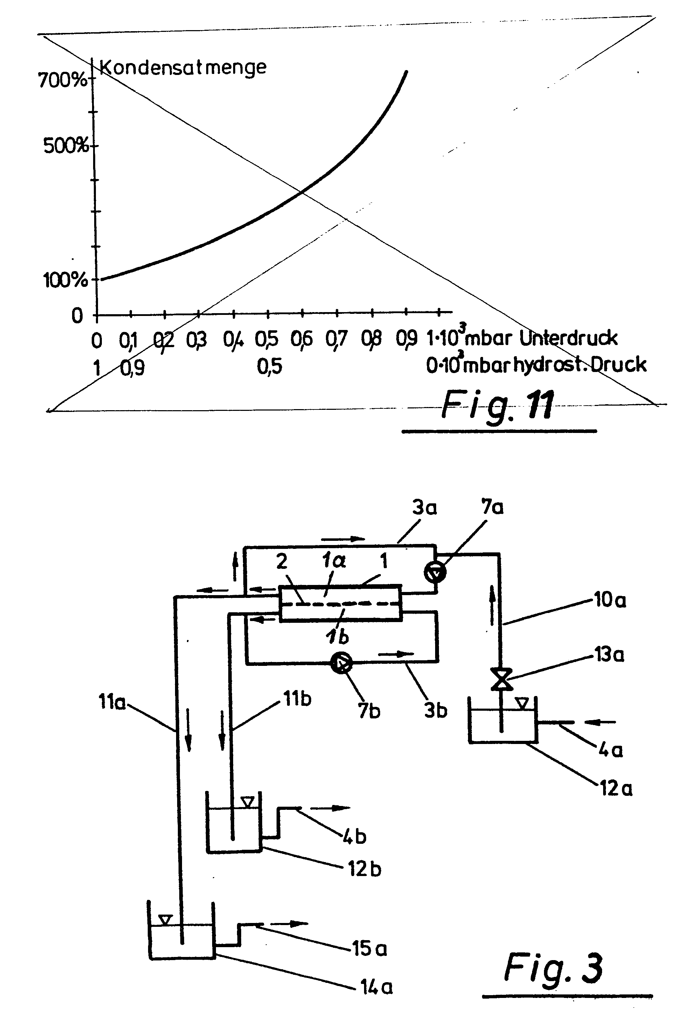

Fig. 1 eine für kontinuierliche Fahrweise geeignete Ausführungsform der erfindungsgemässen Vorrichtung,

Fig. 2 die Reihenschaltung von vier erfindungsgemässen Destillationsvorrichtungen,

Fig. 3 eine Ausführungsform, bei welcher die erfindungsgemässe Vorrichtung barometrisch aufgestellt ist,

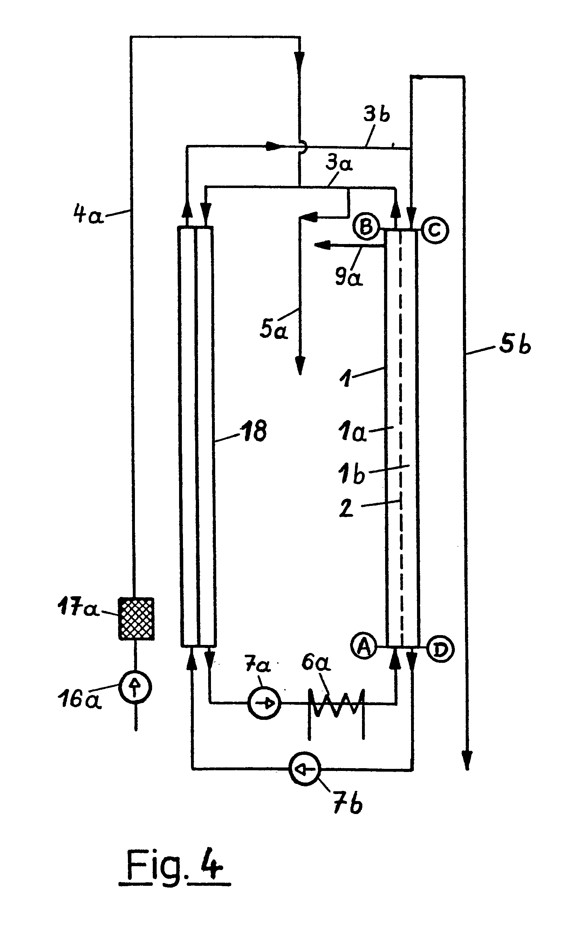

Fig. 4 eine für kontinuierliche Fahrweise geeignete Ausführungsform der erfindungsgemässen Vorrichtung mit Wärmeenergierückgewinnung,

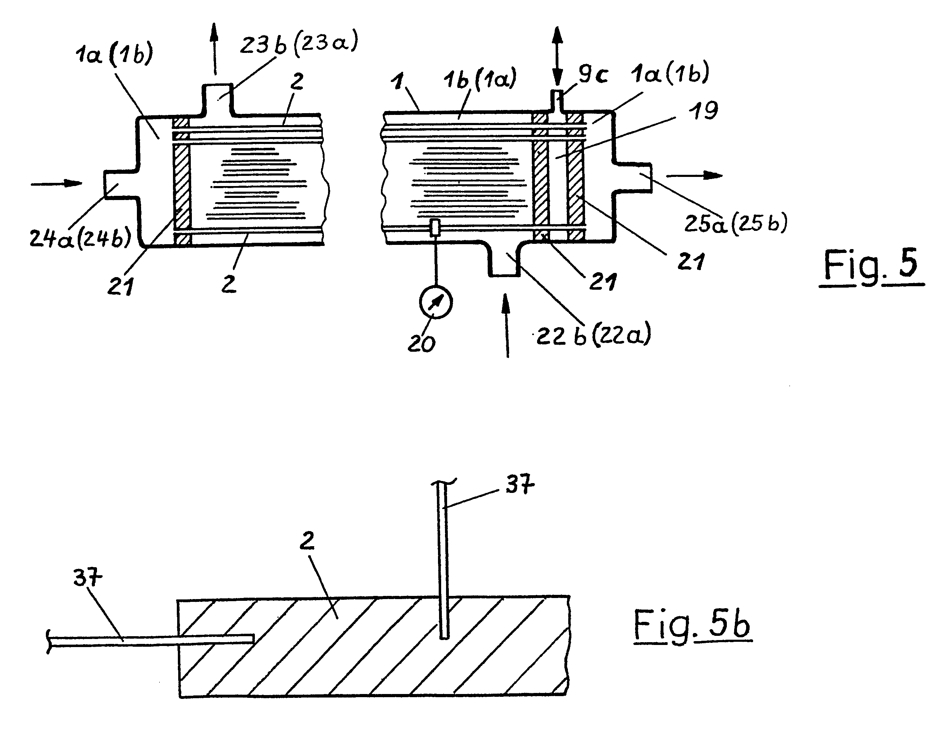

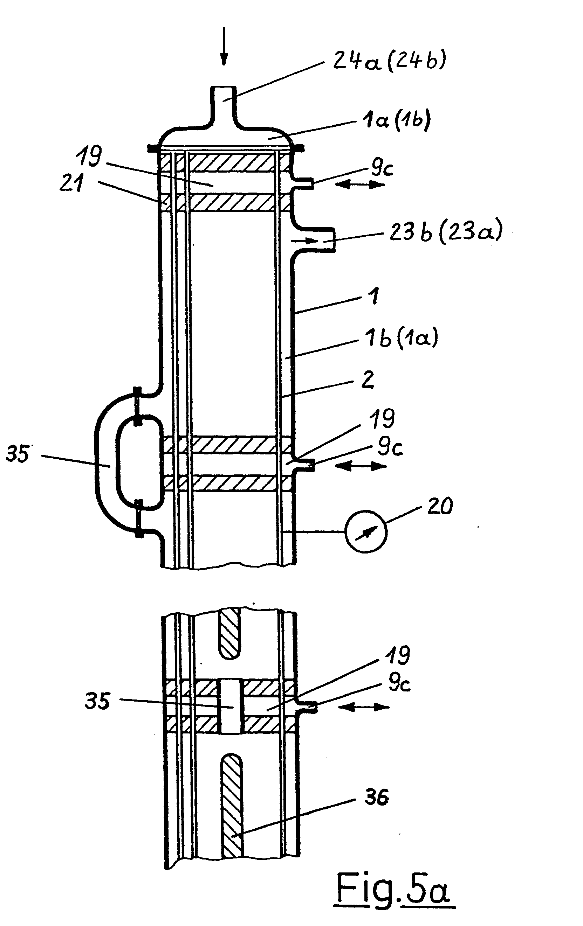

Fig. 5 eine besonders bevorzugte Ausführungsform der erfindungsgemässen Destillationsvorrichtung, die es gestattet, in den Poren der porösen Trennwand einen gegenüber der Lösungsseite und/oder der Kondensatseite unterschiedlichen Druck einzustellen,

Fig. 5a eine Ausgestaltungsform der in Fig. 5 dargestellten Destillationsvorrichtung,

Fig. 5b eine Messanordnung zum Messen des Druckes in den Poren der porösen Trennwand mittels Druckmesssonden,

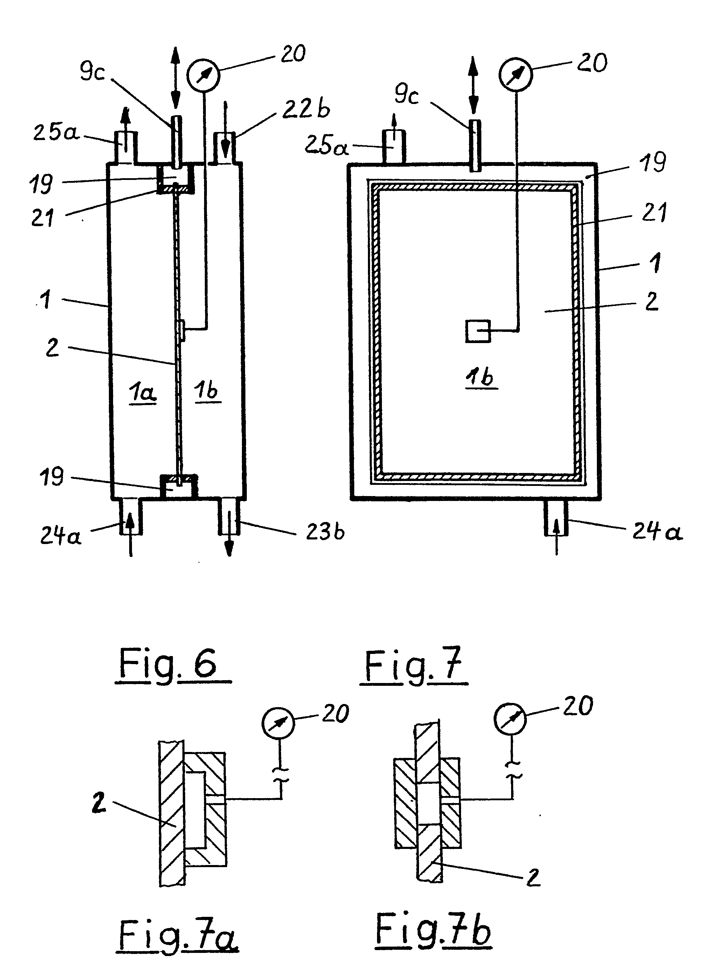

Fig. 6 die Seitenansicht einer Ausführungsform der erfindungsgemässen Destillationsvorrichtung, geeignet für kontinuierliche Fahrweise, mit einer nichtrohrförmigen porösen Trennwand, die es gestattet, in den Poren der porösen Trennwand einen gegenüber der Lösungsseite und/oder der Kondensatseite unterschiedlichen Druck einzustellen,

Fig. 7 die Draufsicht der in Fig. 6 dargestellten Vorrichtung,

Fig. 7a und Fig. 7b Ausführungsformen von Messstellen zur Ermittlung des Druckes in den Poren einer porösen Trennwand wie der der in den Figuren 6 und 7 dargestellten Vorrichtung,

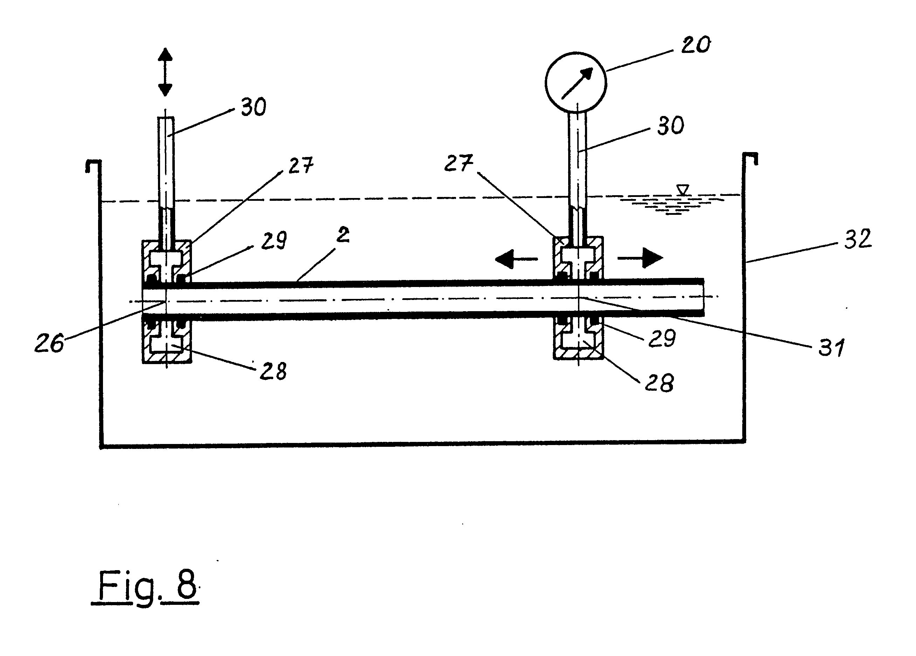

Fig. 8 eine Messanordnung zur Ermittlung des Druckes bzw. der Druckverteilung in den Poren einer (rohrförmigen) porösen Trennwand,

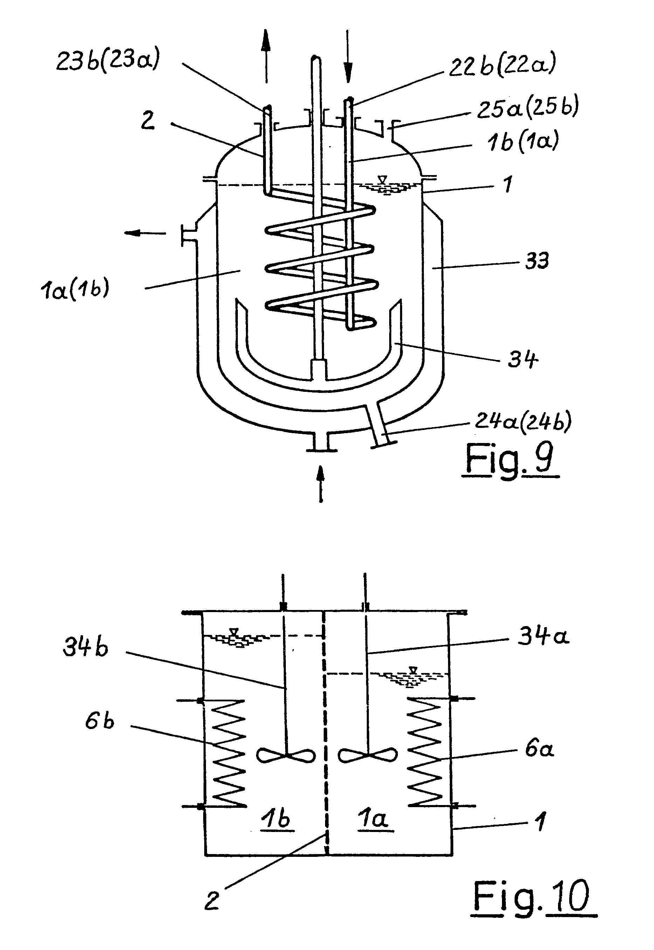

Fig. 9 eine für kontinuierliche und diskontinuierliche Fahrweise geeignete erfindungsgemässe Destillationsvorrichtung mit einem Rührwerk,

Fig. 10 eine für diskontinuierliche Fahrweise geeignete erfindungsgemässe Destillationsvorrichtung mit zwei Rührwerken,

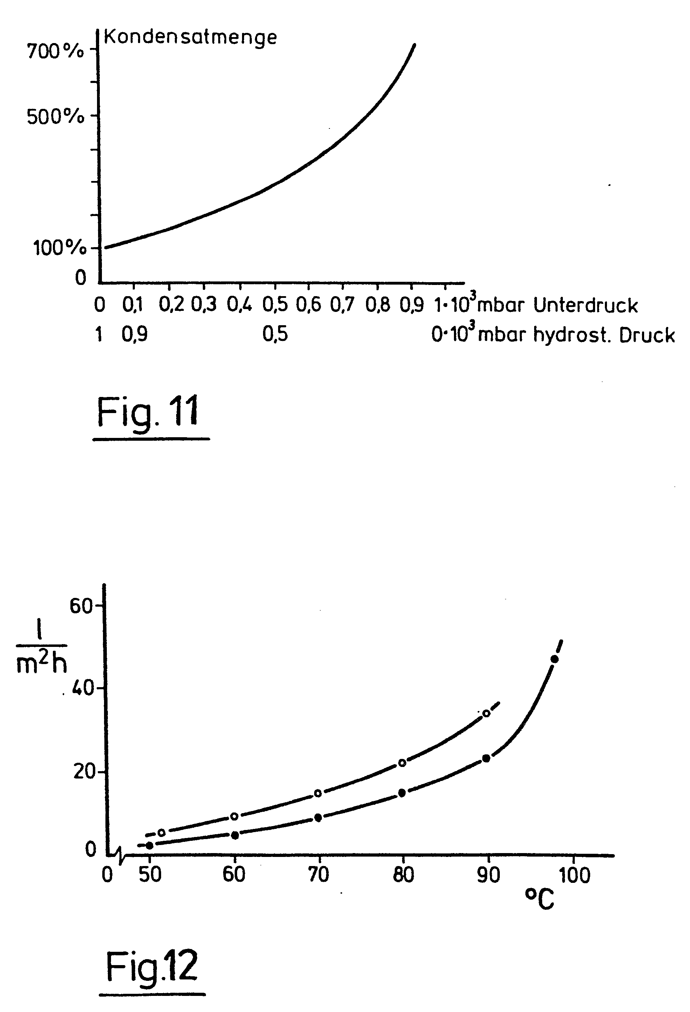

Fig. 11 die graphische Darstellung der bei sonst gleichen Bedingungen erreichbaren Zunahme des transmembranen Destillationsflusses beim Absenken der auf die poröse Trennwand wirkenden Drücke unterhalb Atmosphärendruck bis zum Erreichen des Siedepunktes in der Lösung,

Fig. 12 zu Vergleichszwecken die graphische Darstellung von bei unterschiedlichen Temperaturen und Atmosphärendruck bzw. bei Erreichen des Siedepunktes auf der Lösungsseite erhältlichen transmembranen Destillationsflüssen,

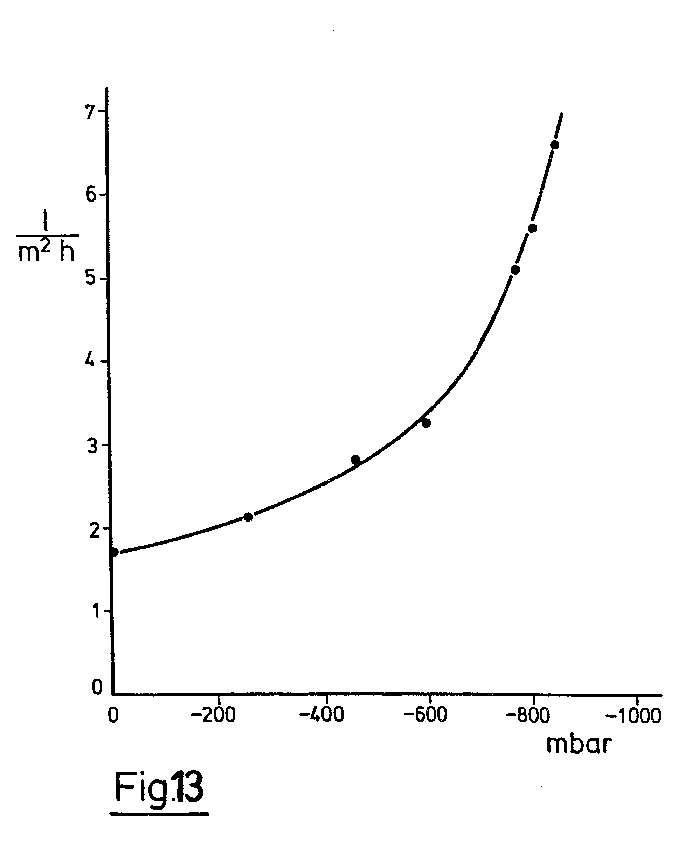

Fig. 13 die graphische Darstellung der bei sonst gleichen Bedingungen erreichbaren Zunahme des transmembranen Destillationsflusses beim Absenken des Druckes auf der Lösungsseite bis zum Erreichen des Siedepunktes in der Lösung,

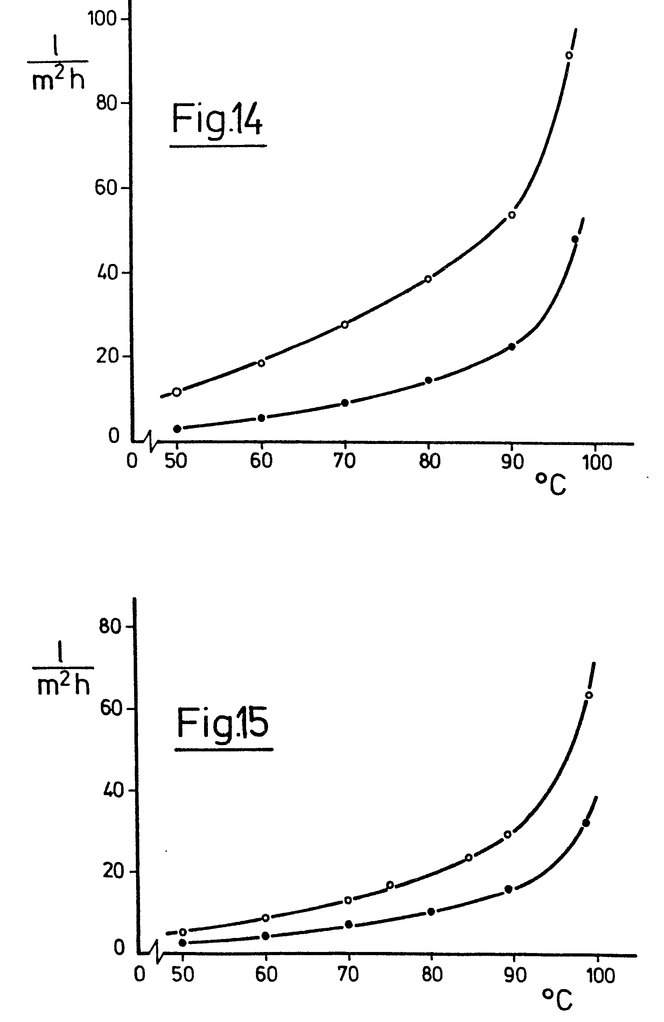

Fig. 14 zu Vergleichszwecken die graphische Darstellung der bei steigenden Temperaturen auf der Lösungsseite erreichbaren Zunahme des transmembranen Destillationsflusses bei Atmosphärendruck auf der Lösungsseite und einem Druck in den Poren der porösen Trennwand, der dem Druck auf der Lösungsseite entsprach, und alternativ dazu bei einem Druck in den Poren, der dem jeweiligen Dampfdruck der Lösung entsprach,

Fig. 15 die graphische Darstellung von erhältlichen transmembranen Destillationsflüssen bei sonst gleicher Fahrweise wie für Fig. 14 angegeben, jedoch mit einer anders beschaffenen porösen Trennwand,

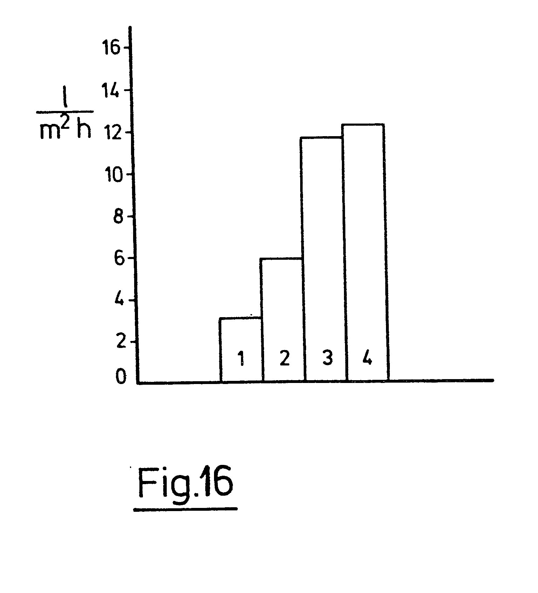

Fig. 16 zu Vergleichszwecken die graphische Darstellung von bei nicht erfindungsgemässer und unterschiedlich erfindungsgemässer Fahrweise erhältlichen transmembranen Destillationsflüssen,

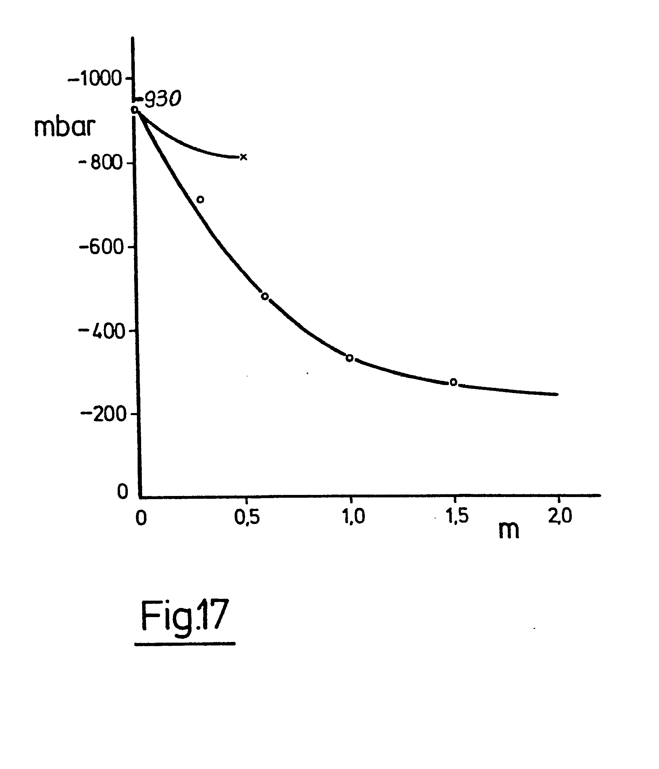

Fig. 17 die graphische Darstellung der Druckverteilung in den Poren unterschiedlich gross (lang) bemessener (rohrförmiger) poröser Trennwände,

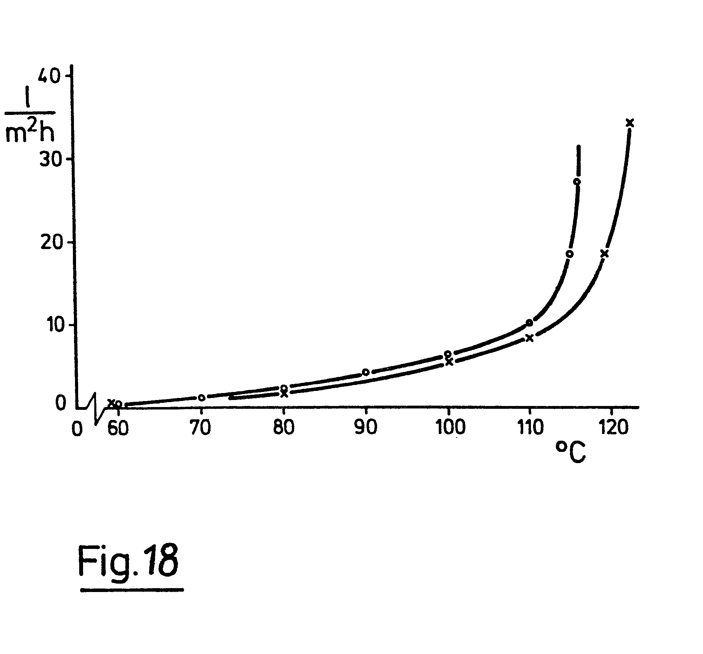

Fig. 18 zu Vergleichszwecken die graphische Darstellung von bei nicht erfindungsgemässer und erfindungsgemässer Fahrweise mit zwei unterschiedlichen Lösungen erhältlichen transmembranen Destillationsflüssen.

Bei den in den Figuren 1 bis 10 dargestellten Ausführungsformen der erfindungsgemässen Vorrichtung betreffen alle Positionszahlen mit dem Zusatz «a» Teile der Lösungsseite und alle Positionszahlen mit dem Zusatz «b» Teile der Destillat- bzw. Kondensatseite. Gleiche Teile haben in allen Figuren die gleiche Positionszahl. In Fig. 1 sind folgende Teile der erfindungsgemässen Vorrichtung dargestellt: Der Behälter 1, der durch die poröse Trennwand 2 in die beiden Kammern 1a; 1b unterteilt ist (1a für die Lösung, 1b für das Kondensat), die Ringleitungen 3a; 3b, die Zuführleitung 4a für die Lösung, die Abführleitungen 5a; 5b, die Wärmetauscher 6a; 6b, die Pumpen 7a, 7b, das Ventil 8a, die Anschlüsse 9a; 9b an eine gemeinsame oder getrennte, jedoch nicht dargestellte, Unterdruck (Vakuum) oder Überdruck erzeugende Einrichtung sowie die Drosselorgane 13a; 13b. Die Durchführung des erfindungsgemässen Verfahrens mit dieser Vorrichtung ergibt sich aus der obigen Beschreibung des Verfahrens von selbst, wobei durch die eingezeichneten Pfeile die Strömungsrichtungen in den einzelnen Rohrleitungen angezeigt sind. Die Pumpen 7a; 7b gestatten es, einen gegebenenfalls weitaus grösseren Volumenstrom durch die Ringleitungen 3a; 3b im Kreislauf umzupumpen als der durch die Zuführleitung 4a zugeführten Lösungsmenge bzw. der durch die Abführleitung 5b abgeführten Kondensatmenge entspricht. Die der Vorrichtung frisch zugeführte Lösungsmenge kann mit dem Ventil 8a auf das gewünschte Mass eingestellt werden. Die Temperaturen der Lösung bzw. des Kondensates können mit Hilfe der Wärmetauscher 6a bzw. 6b auf das gewünschte Niveau gebracht werden. Das Druckniveau in den Kammern 1a und 1b kann mit Hilfe der nicht dargestellten Unter- oder Überdruck erzeugenden Einrichtungen über die Verbindungsleitungen 9a bzw. 9b auf gleiche oder unterschiedliche Werte eingestellt werden. Durch die Abführleitung 5a wird die aufkonzentrierte Lösung, durch die Abführleitung 5b das anfallende Destillat (Kondensat) abgeleitet. Die Wärmetauscher 6a bzw. 6b können auch in den Kammern 1a bzw. 1b angeordnet werden. Anstelle üblicher Wärmetauscher können auch andere, beispielsweise elektrisch betriebene, Heizeinrichtungen oder Kühleinrichtungen (Peltierelemente) eingesetzt werden. Diese ermöglichen in besonders vorteilhafter Weise auch die Wärmezufuhr bzw. den Wärmeentzug in unmittelbarer Nähe der porösen Trennwand. Auch kann die Wandung des Behälters 1 selbst als Wärmeübertragungsfläche benutzt werden. Weiterhin kann ein Unterdruck an der porösen Trennwand 2 auch unter Wegfall der nicht dargestellten Unterdruckeinrichtungen und der zu diesen führenden Verbindungsleitung 9a; 9b erzeugt werden, und zwar indem durch entsprechende Einstellung der Drosselorgane 13a; 13b durch die Pumpen 7a; 7b saugseitig ein ausreichend grosser Unterdruck erzeugt wird, der auch in den Kammern 1a; 1b wirksam wird. Bei der in Figur 1 dargestellten Ausführungsform der erfindungsgemässen Vorrichtung strömen die Lösung und das Destillat (Kondensat) im Gegenstrom zueinander an der porösen Trennwand 2 entlang. Durch Anordnen der Drosselorgane 13a; 13b nach den Kammern 1a bzw. 1b lässt sich mit den Pumpen 7a; 7b in den Kammern 1a; 1b ein Überdruck erzeugen.

In Figur 2 sind vier in Reihe geschaltete Kammerpaare 1a; 1b dargestellt. Die Lösung durchströmt die vier Kammern 1a der Reihe nach auf der Bildebene von links nach rechts, das Destillat (Kondensat) die vier Kammern 1b von rechts nach links. Beide Flüssigkeiten strömen also in Gegenstrom zueinander. Die Eintrittstemperatur $t_3$ der Lösung ist grösser als ihre Austrittstemperatur $t_4$, die Eintrittstemperatur $t_1$ des Kondensates ist kleiner als seine Austrittstemperatur $t_2$. Ausserdem ist $t_3$ grösser als $t_2$ und $t_4$ grösser als $t_1$. Es ist möglich, die Einstellung der Flüssigkeitsströme so zu wählen, dass annähernd $t_3-t_2 = t_4-t_1$ ist, d.h., dass in jeder der vier Stufen annähernd die gleiche Temperaturdifferenz zwischen Lösung und Destillat (Kondensat) herrscht. Auch ist es möglich, an einer oder mehreren Stellen einen Kondensatteilstrom abzuführen, der beispielsweise der in jeder Stufe erzeugten Kondensatmenge entsprechen kann. Ebenso ist es möglich, zwischen den einzelnen Stufen (Kammerpaaren) dem Lösungsstrom frische Lösung in beliebiger Menge beizumischen. Falls gewünscht, können zwischen einzelnen Stufen auch Wärmetauscher zum Heizen oder Kühlen der Flüssigkeitsströme angeordnet sein. Da diese Figur nur die Möglichkeit der Reihenschaltung mehrerer poröser Trennwände schematisch veranschaulichen soll, sind weitere Einrichtungen, beispielsweise die Anschlüsse zum Anschliessen von Unter- oder Überdruck erzeugenden Einrichtungen, Pumpen, Mess- und Regelgeräte und -organe usw. nicht dargestellt.

In Fig. 3 ist die barometrische Aufstellung des Behälters 1 mit den Kammern 1a; 1b und der porösen Trennwand 2 dargestellt. Die Behälter 12a; 12b und 14a sind als Tauchgefässe ausgebildet, in welche die Steigleitung 10a für die Lösung und die Falleitungen 11b bzw. 11a für das Kondensat bzw. die konzentrierte Lösung unterhalb der Flüssigkeitsoberfläche in diesen Gefässen münden und die über die Leitungen 4a; 4b bzw. 15a kontinuierlich oder diskontinuierlich befüllt bzw. entleert werden können. Der in den Kammern 1a; 1b herrschende Unterdruck richtet sich nach der Höhe der Steigleitung 10a bzw. der Falleitungen 11a; 11b. Die Pumpen 7a; 7b dienen als Umwälzpumpen für die Lösung bzw. das Kondensat. Die der Kammer 1a zugeführte Menge frischer Lösung richtet sich nach dem Niveau-Unterschied zwischen den Tauchgefässen 12a und 14a und kann mit Hilfe des Ventiles 13a gedrosselt werden. Beide Kammern 1a; 1b können zusätzlich an Unterdruckeinrichtungen angeschlossen sein, und sei es nur zum Zwecke der Entlüftung. Auch können Wärmetauscher in der Steigleitung 10a, den Ringleitungen 3a; 3b und/oder den Falleitungen 11a; 11b vorgesehen werden. Weiterhin kann die Oberseite der Kammer 1a für die Lösung beispielsweise als Sonnenkollektor ausgebildet sein und die Unterseite der Kammer 1b für das Kondensat mit Kühlrippen versehen sein. Schliesslich können in der Steigleitung 10a und/oder den Falleitungen 11a; 11b auch Förder- oder Dosierpumpen angeordnet werden.

Werden die Behälter 12a; 12b und 14a nicht unterhalb, sondern oberhalb des Behälters 1 angeordnet (Hochbehälter), so können die Kammern 1a und 1b mit Überdruck betrieben werden. Die Höhe des Überdruckes ergibt sich dabei aus dem Niveau-Unterschied zwischen den Flüssigkeitsspiegeln in den (Hoch-)Behältern 12a; 12b bzw. 14a und der porösen Trennwand 2. Die Falleitungen 11a und 11b aus Figur 3 werden bei dieser Anordnung zu Steigleitungen. Die (Hoch-)Behälter 12a; 12b und 14a können bei entsprechend grossem Volumen als Vorratsbehälter oder bei kleinem Volumen lediglich als Niveaugefässe dienen. Dies gilt sinngemäss auch für die in Figur 3 dargestellte Anordnung der drei genannten Behälter als Tauchgefässe.

Die in Figur 4 dargestellte Ausführungsform der erfindungsgemässen Vorrichtung weist ausser den Teilen, die auch die in Fig. 1 dargestellte Ausführungsform aufweist und die aus diesem Grunde auch die ihrer Funktion entsprechenden gleichen Positionszahlen haben, noch folgende Teile auf: eine Zuführpumpe 16a für die Lösung, ein Filter 17a für die Lösung und einen Wärmetauscher 18, mit dem eine Rückgewinnung eines Teils, gegebenenfalls des grössten Teils, der durch die Transmembrandestillation (Verdampfungswärme) und durch Wärmeleitung von der Lösung in das Destillat (Kondensat) übertragenen Wärmeenergie möglich ist. Die zum Erreichen der Eintrittssolltemperatur der Lösung erforderliche Wärmemenge wird der Lösung unmittelbar vor Eintritt in die Kammer 1a durch den Wärmetauscher 6a zugeführt. Auch bei dieser Ausführungsform der erfindungsgemässen Vorrichtung werden die Lösung und das Kondensat mit Hilfe der Umwälzpumpen 7a bzw. 7b durch die Ringleitungen 3a bzw. 3b im Kreislauf umgepumpt. Die durch die Entnahmeleitung 5b aus dem Kreislauf austretende Destillatmenge entspricht der durch die poröse Trennwand 2 hindurchtretenden. Die aus der Entnahmeleitung 5a aus dem Kreislauf austretende Lösungsmenge entspricht der durch die Zuführleitung 4a dem Kreislauf zugeführten Lösungsmenge abzüglich der durch die Entnahmeleitung 5b austretenden Kondensatmenge. Wie die Fig. 4 weiterhin zeigt, wird bei dieser Ausführungsform die aufkonzentrierte Lösung an einer Stelle entnommen, an welcher die Konzentration der Lösung am höchsten und die Temperatur der Lösung am niedrigsten ist. Die Entnahme des Kondensats erfolgt an einer Stelle, an welcher das Kondensat die niedrigste Temperatur hat.

In Fig. 5 ist eine besonders bevorzugte Ausführungsform des Behälters 1 zur Durchführung des erfindungsgemässen Verfahrens dargestellt. Bei dieser Ausführungsform wird die poröse Trennwand 2 durch eine Vielzahl von Rohren gebildet. Die die poröse Trennwand 2 bildenden Rohre sind an ihren Enden in die Rohrböden 21 eingebettet, die beispielsweise aus einer für diesen Zweck üblichen Vergussmasse bestehen können und die als Trennwände zwischen den einzelnen Kammern wirken. Der Behälter 1 weist ferner eine Eintrittsöffnung 24a (24b) und eine Austrittsöffnung 25a (25b) für die Lösung (oder das Destillat bzw. Kondensat) und eine Eintrittsöffnung 22b (22a) und eine Austrittsöffnung 23b (23a) für das Destillat bzw. Kondensat (oder die Lösung) auf. Die Lösung kann hierbei also durch die Rohre geleitet werden, wobei das Destillat (Kondensat) dann die Rohre umströmt, es kann jedoch auch in umgekehrter Weise verfahren werden. In der Fig. 5 ist dies in der Weise zum Ausdruck gebracht, dass die bei umgekehrter Fahrweise alternative Bedeutung auch der beiden Kammern 1a bzw. 1b in runde Klammern gesetzt ist. Die die poröse Trennwand 2 bildenden Rohre und damit der Behälter 1 können beliebig lang sein und waagerecht, wie in Fig. 5 dargestellt, oder senkrecht angeordnet sein. Bei senkrechter Anordnung ergibt sich eine der Länge der Rohre entsprechende Differenz des hydrostatischen Druckes und damit der Siedetemperaturen zwischen der höchsten und der tiefsten Stelle, während bei waagerechter Anordnung eine Druckdifferenz zwischen der Eintritts- und der Austrittsseite im wesentlichen nur durch die unvermeidlichen Strömungsverluste auftritt. Vollständigkeitshalber sei noch ergänzt, dass auch die schräge Anordnung – also eine zwischen einer waagerechten und einer senkrechten Anordnung liegende – des in Figur 5 und auch der in den übrigen Figuren dargestellten Behälter 1 von Vorteil sein kann. Wird eine Ausführungsform gewählt, bei welcher der Behälter 1 von der waagerechten in die senkrechte Anordnung und umgekehrt schwenkbar angeordnet ist, so lassen sich die Druckverhältnisse auf einfache Weise gegebenenfalls auch während des Betriebes der Vorrichtung verändern, was beispielsweise für Versuchs- oder Laboreinrichtungen von grossem Vorteil sein kann, zumal bei solchen Anlagen häufig mit Schläuchen anstelle von starren Rohrleitungen gearbeitet wird.

Wesentliches Merkmal des in den Figur 5 u. 5a dargestellten Behälters 1 ist die (Unter-)Druck-Kammer 19, die über den Anschluss 9c mit einer Einrichtung zur Erzeugung von Unterdruck oder Überdruck verbunden werden kann. Durch diese Einrichtung 19; 9c ist es möglich, in besonders vorteilhafter Weise in den Poren der porösen Trennwand einen Druck einzustellen, der weitestgehend dem Dampfdruck der Lösung entspricht, selbst wenn in den Kammern 1a und 1b ein höherer Druck herrscht, als dem Dampfdruck entspricht. Voraussetzung hierfür ist – wie oben bereits ausführlich erläutert –, dass die Wandung der die poröse Trennwand bildenden Rohre aus einem Werkstoff besteht, der für diese Fahrweise geeignet ist, d.h. der also beispielsweise netzartig aufgebaut ist, wobei oben bereits eingehend ausgeführt wurde, was hierunter im Sinne der vorliegenden Erfindung verstanden wird. Gegebenenfalls kann es zweckmässig sein, statt eines langen Behälters 1 mit einer (Unter-)Druck-Kammer 19 mehrere kürzere solcher Behälter nacheinander anzuordnen. Es ist jedoch auch möglich, an beiden Seiten des Behälters 1 eine solche Kammer 19 vorzusehen, also zwei Kammern 19 für einen Behälter 1. Schliesslich können auch mehr als zwei solcher Kammern 19 in einem Behälter 1 angeordnet sein, wobei für die nicht an den Enden der Rohre angeordneten Kammern 19 eine Umführung 35 für die die Rohre umströmende Flüssigkeit vorzusehen ist, so wie dies in Figur 5a dargestellt ist. Zur Kontrolle des in den Poren der porösen Trennwand 2 herrschenden Druckes (Unterdruckes) ist es empfehlenswert, ein Manometer 20 vorzusehen, das mit einem der Rohre verbunden ist. In Figur 8 sind Einzelheiten einer solchen Verbindung zwischen einem porösen Rohr und einem Manometer gezeigt. Bei der in Figur 5 dargestellten Ausführungsform des Behälters 1 können Lösung und Destillat (Kondensat) wie dargestellt, im (Kreuz-)Gegenstrom, jedoch durch Umkehr der Flussrichtung einer der beiden Flüssigkeiten auch im (Kreuz-)Gleichstrom geführt werden. Einer weitergehenden Erläuterung der Figur 5a bedarf es unter Berücksichtigung der Positionszahlen nicht. Mit der Positionszahl 36 sind im übrigen Füll- bzw. Verdrängerkörper bezeichnet.

Bei benetzenden Flüssigkeiten umströmen diese vorzugsweise die Rohre, da sonst die Gefahr besteht, dass eine solche Flüssigkeit durch die Rohrwände in die Kammer 19 gesaugt wird.

Die Figuren 6 und 7 zeigen in zwei unterschiedlichen Ansichten eine Ausführungsform der erfindungsgemässen Vorrichtung, bei welcher die poröse Trennwand 2 als ebene Platte oder Membran ausgeführt ist und aus einem Werkstoff besteht, der das Erzeugen des Dampfdruckes allein in den Poren der porösen Trennwand 2 gestattet. Die (Unter-)Druck-Kammer 19 ist hierbei in Form eines Ringkanals ausgebildet, in welchen die poröse Trennwand 2 mit ihren vier Seiten mündet. Die ringkanalförmige Kammer 19 ist zu den Kammern 1a und 1b hin gasdicht abgedichtet. Die übrigen Teile dieser Ausführungsform ergeben sich aus den Positionszahlen, so dass es einer (nochmaligen) Beschreibung dieser Teile nicht mehr bedarf. Das Erzeugen des dem Dampfdruck der Lösung entsprechenden (Unter-)Druckes allein in den Poren der porösen Trennwand 2 hat hierbei den zusätzlichen Vorteil, dass zwischen der Lösungsseite 1a und der Kondensatseite 1b zumindest kein nennenswerter Druckunterschied auftritt, der gegebenenfalls zu einer Gefahr für die poröse Trennwand 2 werden könnte.

In Figur 8 ist eine Messeinrichtung dargestellt, mit welcher unterschiedliche Drücke (Unterdrücke) in den Poren einer rohrförmigen porösen Trennwand 2 mit entsprechender Porenstruktur eingestellt werden können und die sich dabei einstellenden Drücke (Unterdrücke) in unterschiedlichen Abständen von der Druckanschlussstelle 26 gemessen werden können. An der Anschlussstelle 26 ist die rohrförmige poröse Trennwand 2 von einem Ring 27 mit einem Ringkanal 28 umgeben, wobei der Ringkanal 28 durch die Dichtringe 29 gasdicht zur Umgebung hin abgedichtet ist. Über die Rohrleitung 30 kann der Ringkanal 28 mit einer (Unter-)Druck erzeugenden Einrichtung (nicht dargestellt) verbunden werden. An der Messstelle 31 sind die gleichen Teile 27; 28; 29; 30 angeordnet wie an der Anschlussstelle 26. Die Rohrleitung 30 ist hierbei jedoch mit einem Manometer 20 verbunden. Die Messstelle 31 ist auf der rohrförmigen porösen Trennwand 2 verschiebbar angeordnet, so dass in beliebigen Abständen von der Anschlussstelle 26 der in den Poren der porösen Trennwand 2 herrschende (Unter-)Druck gemessen werden kann, der sich einstellt, wenn in dem Ringkanal 28 der Anschlussstelle 26 ein Unter- oder Überdruck beliebiger Grösse erzeugt wird. Zur Messung wird die poröse Trennwand 2 in eine die poröse Trennwand 2 nicht benetzende, d.h. nicht in deren Poren eindringende Flüssigkeit, beispielsweise Wasser, getaucht, die sich in einem Behälter 32 befinden kann. Die Flüssigkeit dringt hierbei auch in das Rohrinnere, aufgrund der flüssigkeitsabweisenden Eigenschaften (Nichtbenetzbarkeit) der porösen Trennwand jedoch nicht in deren Poren. Die in Figur 8 beispielshalber dargestellte Anordnung zum Messen des Druckes in den Poren der porösen Trennwand 2 kann auch für Ausführungsformen der erfindungsgemässen Vorrichtung verwendet werden, die der in Figur 5 dargestellten entsprechen. Für ebene poröse Trennwände 2, wie sie beispielsweise in den Figuren 6 und 7 dargestellt sind, ist die Messanordnung 27; 28; 29 entsprechend umzugestalten und der flachen Form der porösen Trennwand 2 anzupassen, beispielsweise wie in den Figuren 7a und 7b dargestellt. Diese Figuren bedürfen keiner weiteren Erläuterung.

Der mit der in Figur 8 dargestellten Messanordnung gemessene Druck in den Poren der porösen Trennwand 2 ist ein Mittelwert aus den in den einzelnen Poren herrschenden z.T. geringfügig unterschiedlichen Drücken. Es hat sich jedoch gezeigt, dass die Ermittlung dieses Mittelwertes bei der betrieblichen Nutzung des erfindungsgemässen Verfahrens bzw. der erfindungsgemässen Vorrichtung im allgemeinen den gestellten Anforderungen gerecht wird und eine gute Kontrolle und Überwachung des Verfahrens ermöglicht. Es ist jedoch auch möglich, durch Druckmesssonden 37, deren Abmessungen nur einen Bruchteil der Dicke der porösen Trennwand 2 beträgt, die in den Poren herrschenden Drücke auch örtlich sehr begrenzt zu ermitteln. Zu diesem Zweck kann an der gewünschten Stelle eine den Abmessungen (Durchmesser) der Sonde entsprechende Vertiefung (Bohrung) bis zu der Tiefe in die poröse Trennwand 2 angebracht werden, an welcher der Druck ermittelt werden soll. In diese Vertiefung (Bohrung) wird die Sonde 37 dann eingeführt und die Vertiefung (Bohrung) mit der darin befindlichen Sonde nach aussen gasdicht abgedichtet. Figur 5b zeigt eine solche Messanordnung.

Bei der in Figur 9 dargestellten Ausführungsform der erfindungsgemässen Vorrichtung besteht die poröse Trennwand 2 aus wenigstens einem spiralförmig ausgebildeten Rohr (Rohrschlange), durch welches das Destillat (bzw. Kondensat oder die Lösung) geleitet werden kann. Die Kammer 1b für das Destillat bzw. das Kondensat (bzw. 1a für die Lösung bei umgekehrter Fahrweise) wird hierbei also von dem Rohrinnern der porösen Trennwand 2 gebildet. Die Kammer 1a für die Lösung bzw. 1b für das Destillat bzw. Kondensat bei umgekehrter Fahrweise wird durch den Innenraum des Behälters 1 gebildet. Um die in dem Behälter 1 befindliche Flüssigkeit in Bewegung zu halten, ist der Rührer 34 vorgesehen. Der Antrieb dieses Rührers 34 ist nicht dargestellt. Ausserdem ist der Behälter 1 in seinem unteren Bereich doppelwandig ausgeführt, wodurch es möglich ist, den dadurch gebildeten Zwischenraum 33 je nach Bedarf mit einem Kühl- oder Heizfluid zu beaufschlagen. Diese Ausführungsform der erfindungsgemässen Vorrichtung eignet sich insbesondere für diskontinuierliche Fahrweise, also sogenannten Chargenbetrieb, wobei hiermit ein äusserst schonendes Aufkonzentrieren einer Lösung, die dann zweckmässigerweise in den Behälter 1 eingefüllt wird, möglich ist. Falls gewünscht, kann der Behälter 1 aber auch kontinuierlich mit Lösung (oder mit Destillat bzw. Kondensat bei umgekehrter Fahrweise) beaufschlagt werden, zu welchem Zweck die Ein- und Auslassöffnungen 24a (24b) bzw. 25a (25b) verwendet werden können, die sonst zum Befüllen und Entleeren des Behälters 1 dienen. Wird bei dieser Art der erfindungsgemässen Vorrichtung das Destillat bzw. Kondensat durch die Rohrleitung geleitet, so kann der Siedepunkt in unmittelbarer Umgebung der porösen Trennwand 2 auf der Lösungsseite 1a auf einfache Weise beispielsweise dadurch erreicht werden, dass auf der Destillat- bzw. Kondensatseite 1b, d.h. also in der Rohrleitung, ein möglichst niedriger Druck eingestellt wird, beispielsweise ein dem Dampfdruck des Kondensates entsprechender (Unter-)Druck. Soll das Destillat dampfförmig weggeführt werden, so kann in der Rohrleitung ein noch niedrigerer Druck eingestellt werden. Darüber hinaus eignet sich diese Ausführungsform in entsprechend verkleinerter Form auch sehr gut als Laborgerät, bei welchem die Temperatur der in dem Behälter (Gefäss) 1 befindlichen Lösung mit einem Bunsenbrenner oder einer elektrischen Heizplatte an den Siedepunkt herangeführt und das die poröse Trennwand 2 bildende Rohr an eine Wasserleitung angeschlossen werden kann, wenn das Destillat nicht separat aufgefangen zu werden braucht.

Die in Figur 10 dargestellte Ausführungsform der erfindungsgemässen Vorrichtung ist ebenfalls für diskontinuierlichen Betrieb geeignet. Der Behälter 1 wird hierbei durch die ebene, gewölbte oder beliebig anders ausgestaltete poröse Trennwand 2 in die beiden Kammern 1a und 1b für die Lösung bzw. das Kondensat unterteilt. In beiden Kammern 1a; 1b sind Rührer 34a bzw. 34b angeordnet, die die Lösung bzw. das Kondensat in Bewegung halten. Ausserdem ist in der Kammer 1a eine Heizeinrichtung 6a, beispielsweise ein Wärmetauscher, und in der Kammer 1b eine Kühleinrichtung 6b angeordnet. Zur Inbetriebnahme dieser Vorrichtung kann es zweckmässig sein, die Kammer 1b zu Beginn wenigstens teilweise mit Kondensat oder einer kondensatähnlichen Flüssigkeit zu füllen. Die Kammer 1b kann an der höchsten Stelle mit einem Überlauf (nicht dargestellt) versehen werden, wodurch die Möglichkeit geschaffen wird, die Kammer 1b stets ganz mit Kondensat gefüllt und die poröse Trennwand 2 damit völlig bedeckt zu halten.

Anstelle der in Figur 10 dargestellten Wärmeübertragungseinrichtung 6a bzw. 6b könnten die Kammern 1a und 1b auch mit einem Heiz- bzw. Kühlmantel umgeben sein, so wie in Figur 9 dargestellt (dort als Position 33 bezeichnet). Umgekehrt können bei der in Fig. 9 dargestellten Vorrichtung auch andere Heiz- oder Kühleinrichtungen eingesetzt werden.

Erfindungsgemäss können die Kammern 1a und 1b sowie die poröse Trennwand 2 der in den Figuren 9 und 10 dargestellten Ausführungsformen der erfindungsgemässen Vorrichtung auch noch an eine Unter- oder Überdruck erzeugende Einrichtung angeschlossen sein. Ebenso können auch hierbei Messeinrichtungen zur Überwachung des Druckes in den Poren der porösen Trennwand 2 vorgesehen werden, so wie dies in den Figuren 5 bis 8 dargestellt und in der Beschreibung dieser Figuren weiter oben ausführlich erläutert ist.

In den Figuren 1 bis 7, 9 und 10 sind die Kammern 1a und 1b in geschlossener Bauweise ausgeführt. Eine nicht mit Über- oder Unterdruck betriebene Kammer kann aber auch als offenes Gefäss ausgebildet sein. Ausserdem sind in diesen Figuren gegebenenfalls notwendige weitere Mess-, Regel- oder Überwachungseinrichtungen für Drücke, Temperaturen, Flüssigkeitsdurchflussmengen, Konzentrationen usw. der besseren Übersichtlichkeit wegen nicht dargestellt.

Bei der ersten Inbetriebnahme der erfindungsgemässen Vorrichtung liegt im allgemeinen noch kein Kondensat vor, so dass die Kondensatseite 1b zunächst mit einer kondensatgleichen oder -ähnlichen Flüssigkeit gefüllt werden sollte, sofern das Destillat nicht dampfförmig weggeführt werden soll. Dabei hat es sich häufig als besonders vorteilhaft erwiesen, zuerst die Destillatseite 1b mit der kälteren Flüssigkeit zu füllen.

In Figur 11 ist die durch Absenken des Druckes auf der Lösungsseite und auf der Kondensatseite unterhalb Atmosphärendruck erhältliche Kondensatmenge als Prozentsatz der bei Atmosphärendruck erhältlichen Kondensatmenge graphisch dargestellt, und zwar für den Fall, dass auf beiden Seiten der porösen Trennwand etwa der gleiche Unterdruck herrscht. Man erkennt, dass die durch die poröse Trennwand hindurchdiffundierende Destillatmenge, die der erhältlichen Kondensatmenge entspricht, auf ungefähr das 5fache ansteigt, wenn der Druck auf beiden Seiten der porösen Trennwand auf ungefähr 200 mbar abgesenkt wird, und auf ungefähr das 70fache bei einem Druck von ungefähr 100 mbar. Dieser Zusammenhang wurde annähernd für verschiedene poröse Trennwände und verschiedene Lösungen gefunden. Beispielsweise wurden die Messungen mit 45%-iger LiCl-Lösung und mit einer Vorrichtung durchgeführt, bei der die poröse Trennwand auf einem höheren Niveau angeordnet war als der Vorlagebehälter für die Lösung und die Sammelbehälter für das Kondensat bzw. die aufkonzentrierte Lösung. Die Vorrichtung ähnelte der in Figur 3 dargestellten, wobei die genannten Behälter jedoch in geschlossener Bauweise ausgeführt waren und die Steig- bzw. Falleitungen kürzer waren. Die Kammer zur Aufnahme der Lösung und die Kammer zur Aufnahme des Kondensats waren jede an eine individuelle Unterdruckeinrichtung angeschlossen. Die poröse Trennwand bestand aus 6 Rohren aus einem netzartig aufgebauten porösen Polypropylen wie oben ausführlich beschrieben. Die Rohre waren 420 mm lang und hatten einen Aussendurchmesser von 6,1 mm und einen Innendurchmesser von 4,2 mm. Die Lösung umströmte hierbei die Rohre, das Kondensat strömte durch das Rohrinnere. Mittels Umwälzpumpen wurden 250 l/Std. Lösung und Kondensat im Kreislauf umgepumpt und an der porösen Trennwand entlanggeführt. Bei Atmosphärendruck betrug die durch die poröse Trennwand hindurchgetretene Kondensatmenge 103 ml/Std. und bei 100 mbar absolutem Druck 720 ml/Std. Die Temperatur der Lösung lag bei ca. 77°C, auf der Kondensatseite betrug die Temperatur im Mittel ca. 15°C. Die Siedetemperatur der Lösung bei 100 mbar betrug ca. 77°C. Figur 12 zeigt eine Gegenüberstellung der mit dem erfindungsgemässen Verfahren erhältlichen Kondensatmengen und der bei nicht erfindungsgemässer Fahrweise erhältlichen Kondensatmengen ausgedrückt in $1/m^2h$. Die untere Kurve wurde ermittelt, indem das Transmembrandestillationsverfahren bei Atmosphärendruck und unterschiedlichen Temperaturen durchgeführt wurde. Deutlich zu erkennen ist dagegen die zunächst nur geringfügige Zunahme der durch die poröse Trennwand hindurchtretenden Kondensatmenge bei steigender Temperatur der Lösung. Auffallend ist dabei insbesondere der überproportional starke Anstieg der Kondensatmenge bei erfindungsgemässer Fahrweise, d.h. wenn in der Lösung eine Temperatur erreicht wird, die höchstens nur wenig unterhalb der Siedetemperatur liegt, wie oben definiert. Die untere Kurve gibt also nur in ihrem rechten äusseren Abschnitt die erfindungsgemässe Fahrweise wieder. Die obere Kurve wurde erhalten, indem auf der Lösungsseite erfindungsgemäss immer der zu jeder Temperatur der Lösung gehörige Dampfdruck eingestellt wurde, so dass auf der Lösungsseite bei allen Temperaturen somit der Siedepunkt erreicht wurde. Bei ca. 100°C gehen beide Kurven ineinander über (nicht dargestellt), da bei dieser Temperatur bei beiden Fahrweisen der Siedepunkt erreicht wird. Ein Vergleich der beiden Kurven macht ausserdem deutlich, dass in den unteren Temperaturbereichen, also beispielsweise bei 50°C, durch das erfindungsgemässe Verfahren (obere Kurve) eine Verdopplung der Kondensatmenge erreicht wird, während bei höheren Temperaturen die Differenz der Kondensatmengen absolut zwar grösser, prozentual dagegen geringer ist. Die Kondensattemperatur wurde hierbei konstant auf ca. 20°C eingestellt.

Figur 13 zeigt die bei einer konstanten Lösungstemperatur von 55°C erhältliche Kondensatmenge bei unterschiedlichen Unterdrücken auf der Lösungsseite. Auch dieses Diagramm zeigt den äusserst starken Anstieg der durch die poröse Trennwand hindurchtretenden Kondensatmenge unmittelbar vor und bei Erreichen des Siedepunktes in der Lösung, d.h. bei Durchführung des Verfahrens im erfindungsgemässen Bereich. In diesem Diagramm bedeutet beispielsweise «–600 mbar», dass der eingestellte Druck auf der Lösungsseite 600 mbar unter Atmosphärendruck lag.

In Figur 14 sind Ergebnisse graphisch dargestellt, die mit einer erfindungsgemässen Vorrichtung erhalten wurden, wie sie in Figur 5 dargestellt ist. Die untere Kurve gibt die bei Atmosphärendruck und unterschiedlichen Lösungstemperaturen erhältliche Kondensatmenge wieder. Das erfindungsgemässe Verfahren setzt hierbei oberhalb 90°C ein, was an der überproportionalen Zunahme der Kondensatmenge erkennbar ist, die erreicht wird, wenn erfindungsgemäss wenigstens auf der Lösungsseite zumindest der Bereich des Siedepunktes erreicht wird, wie oben definiert. Die obere Kurve gibt die für unterschiedliche Lösungstemperaturen erhältliche Kondensatmenge wieder, wenn in den Poren der porösen Trennwand der der jeweiligen Temperatur entsprechende Dampfdruck, im Vergleich zum Atmosphärendruck also Unterdruck, eingestellt wird, so dass erfindungsgemäss wenigstens in unmittelbarer Umgebung der porösen Trennwand (zumindest annähernd) der Siedepunkt erreicht wird. Ein Vergleich der beiden Kurven zeigt auch hier wieder sehr deutlich, dass das erfindungsgemässe Verfahren (obere Kurve) bei niedrigeren Temperaturen zu einer relativ grösseren Steigerung der erhältlichen Kondensatmenge führt als bei höheren Temperaturen. So konnte beispielsweise bei 50°C eine Vervierfachung der Kondensatmenge gegenüber nicht erfindungsgemässer Fahrweise erreicht werden, bei 70°C eine Verdreifachung und bei 90°C etwa mehr als eine Verdopplung, wobei die absolute Steigerung der Kondensatmenge in $1/m^2 h$ bei höheren Temperaturen wesentlich mehr betrug als bei niedrigen Temperaturen. So betrug die durch das erfindungsgemässe Verfahren (obere Kurve) erreichte Zunahme der Kondensatmenge im Vergleich zu nicht erfindungsgemässer Fahrweise bei 90°C 30 $1/m^2 h$, bei 50°C dagegen nur

etwa 9 $1/m^2 h$. Ist man auf niedrige Lösungstemperaturen angewiesen, so bietet das erfindungsgemässe Verfahren hierfür also ganz beträchtliche technische und wirtschaftliche Vorteile. Doch stellt auch die bei höheren Temperaturen beispielsweise erreichte Verdopplung der Kondensatmenge bei erfindungsgemässer Fahrweise einen beachtlichen Erfolg dar.

Die in den Figuren 12 bis 14 graphisch dargestellten Ergebnisse wurden mit einer wässrigen 0,1%-igen NaCl-Lösung erhalten. Die poröse Trennwand bestand hierbei aus 420 mm langen Rohren, die einen Aussendurchmesser von 6,2 mm und einen Innendurchmesser von 4,1 mm, somit also eine Wandstärke von 1,05 mm hatten. Die Rohrwandung bestand aus einem netzartig aufgebauten porösen Polypropylen, wie oben ausführlich beschrieben, wobei das Porenvolumen 80% und der grösste Porendurchmesser 0,85 μm betrug. Insgesamt waren 18 solcher parallelgeschalteter Rohre zu einer Einheit zusammengefasst (Modulbauweise vgl. Figur 5). Die Lösung strömte hierbei durch die Rohre, das Kondensat umströmte die Rohre auf deren Aussenseite. Die dieser Destillationseinheit zugeführte Lösungsmenge und Kondensatmenge betrug 250 l/h, wobei die aus der Destillationseinheit austretende Lösungsmenge um die durch Transmembrandestillation durch die poröse Trennwand in das Kondensat überführte Destillatmenge verringert und die austretende Kondensatmenge um diesen Anteil vergrössert war.

Die in Figur 15 graphisch dargestellten Ergebnisse wurden unter den sonst gleichen Bedingungen erhalten, wie die in Figur 14 dargestellten, jedoch mit einer unterschiedlich porösen Trennwand. Die hierbei verwendeten Rohre hatten nämlich einen Aussendurchmesser von 8,6 mm, einen Innendurchmesser von 5,5 mm, somit also eine Wandstärke von 1,55 mm, ein Porenvolumen von nur 75% und einen grössten Porendurchmesser von nur 0,55 μm. Alle übrigen Parameter waren unverändert. Die unter diesen Bedingungen erhältlichen Kondensatmengen waren erheblich geringer, was auf die grössere Wandstärke der Rohre, das kleinere Porenvolumen und die kleineren Poren (Porendurchmesser) zurückzuführen ist. Die hieraus zu ziehenden Schlussfolgerungen ergeben sich von selbst.

Fig. 16 zeigt eine Gegenüberstellung der unter unterschiedlichen Betriebsbedingungen erhältlichen Kondensatmengen, wobei für die graphische Darstellung die entsprechenden aus mehreren Messreihen erhaltenen Werte gemittelt wurden. Die Lösungseintrittstemperatur betrug jeweils 50°C, die Kondensateintrittstemperatur 16°C. Die übrigen Parameter entsprechen denen, die auch bei der Ermittlung der in den Figuren 12 bis 14 graphisch dargestellten Ergebnisse vorlagen. Unter den genannten Bedingungen wurde die Kondensatmenge «1» bei nicht erfindungsgemässer Fahrweise erhalten, indem auf der Lösungsseite, der Kondensatseite und in den Poren der porösen Trennwand Atmosphärendruck eingestellt wurde. Die Kondensatmenge «2» wurde erhalten, wenn auf der Lösungsseite ein Unterdruck erzeugt wurde, der dem Dampfdruck der Lösung entsprach, d.h. also, wenn auf der Lösungsseite der Siedepunkt erreicht und beibehalten wurde. Die Kondensatmenge «3» wurde erreicht, wenn nur in den Poren der porösen Trennwand ein Druck (Unterdruck) eingestellt wurde, der dem Dampfdruck der Lösung bei 50°C entsprach, und auf der Lösungs- und der Kondensatseite Atmosphärendruck eingestellt wurde. Die Kondensatmenge «4» wurde erreicht, wenn auf der Lösungsseite und in den Poren der porösen Trennwand ein Druck (Unterdruck) eingestellt wurde, der dem Dampfdruck der Lösung bei 50°C entsprach.

Diese Ergebnisse zeigen sehr deutlich, dass mit dem erfindungsgemässen Verfahren eine beträchtliche Steigerung der Kondensatmenge möglich ist, wobei durch Einstellen des der Temperatur der Lösung entsprechenden Druckes allein in den Poren der porösen Trennwand bereits eine derartige Steigerung der erhältlichen Kondensatmenge erreicht werden kann, dass auf das Erzeugen des entsprechenden (Unter-)Druckes auf der Lösungsseite, das zwar auch noch zu einer, wenn auch weniger ausgeprägten Steigerung der Kondensatmenge führt, gegebenenfalls sogar verzichtet werden kann. Das bedeutet, dass die maximal mögliche Kondensatmenge in der Tat gegebenenfalls bereits dann zumindest annähernd erhältlich ist, wenn erfindungsgemäss wenigstens auf der Lösungsseite und in unmittelbarer Umgebung der porösen Trennwand der jeweilige Siedepunkt der Lösung, zumindest dessen Bereich, erreicht wird.

Figur 17 zeigt das Druckgefälle in den Poren von an eine Unterdruck erzeugende Einrichtung angeschlossenen Rohren, die zwar aus dem gleichen Werkstoff bestanden und auch die gleichen Durchmesser hatten wie die im Zusammenhang mit den Figuren 12 bis 14 beschriebenen Rohre, jedoch unterschiedlich lang waren. Das eine Rohr hatte eine Gesamtlänge von 0,5 m, das andere eine Gesamtlänge von 2 m. Die beiden Druckabfallkurven wurden mit der in Figur 8 dargestellten und oben beschriebenen Messeinrichtung bei Raumtemperatur und in Wasser ermittelt. An einem Ende der Rohre wurde ein Unterdruck erzeugt, der 930 mbar unter Atmosphärendruck lag, und durch Verschieben der Messstelle (Pos. 31 in Figur 8) der sich in unterschiedlichen Abständen von diesem Rohrende in den Poren einstellende Unterdruck gemessen. Die Ergebnisse dieser Messungen zeigen, dass die Länge der Rohre einen starken Einfluss auf den Druckabfall in den Poren der Rohre hat. Dies gilt sinngemäss natürlich auch für ebene Platten, Stäbe oder anders ausgebildete Formkörper mit einer entsprechenden netzartig aufgebauten Porenstruktur. Das bedeutet, dass bei kurzen Rohren bzw. kleinflächigen Platten der an einer Stelle, also beispielsweise an einem Rohrende, erzeugte Unterdruck sich in einem beliebigen Abstand von dieser Stelle stärker auswirkt als bei einem langen Rohr bzw. einer grossflächigen Platte.

Je nach dem bei Durchführung des erfindungsgemässen Verfahrens an der porösen Trennwand sich einstellenden Temperaturprofil und dem sich daraus ergebenden Dampfdruckprofil, kann eine Druckverteilung, wie sie durch die untere Kurve wiedergegeben wird, dazu führen, dass auf der Lösungsseite in unmittelbarer Umgebung der gesamten porösen Trennwand der jeweilige Siedepunkt der Lösung, zumindest der erfindungsgemässe Bereich desselben, erreicht wird. Ist die Temperaturdifferenz auf der Lösungsseite zwischen Eintritts- und Austrittsseite und damit die Dampfdruckdifferenz dagegen nur gering, so kann es zum Erreichen eines dem Dampfdruck der Lösung weitestgehend entsprechenden Druckes in den Poren der porösen Trennwand zweckmässig sein, die poröse Trennwand in kurzen Längenabständen mit einer Unterdruck erzeugenden Einrichtung zu verbinden, so wie dies beispielsweise in Figur 5a dargestellt ist.

Die in Figur 18 graphisch dargestellten Messwerte wurden bei Durchführung des Transmembrandestillationsverfahrens bei nicht erfindungsgemässer und erfindungsgemässer Fahrweise ermittelt, und zwar die obere Kurve mit 43%-iger $CaCl_2$-Lösung, die untere mit 33%-iger LiCl-Lösung. Die Messungen wurden bei Drücken auf der Lösungsseite durchgeführt, die oberhalb Atmosphärendruck lagen, und zwar bei 1065 mbar für die obere Kurve ($CaCl_2$-Lösung) und bei 1040 mbar für die untere Kurve (LiCl-Lösung), wobei die Siedetemperaturen oberhalb 120°C lagen. Auch diese Messungen zeigen, dass nur bei erfindungsgemässer Fahrweise, d.h. im unmittelbaren Bereich des Siedepunktes wie oben definiert, ausreichend hohe Kondensatmengen erreichbar sind, will man das Transmembrandestillationsverfahren wirtschaftlich nutzen. Die bei diesen Messungen verwendete poröse Trennwand war die gleiche, wie sie bei der Ermittlung der in Figur 15 graphisch dargestellten Messwerte verwendet wurde und weiter oben beschrieben ist.

Weitere Beispiele:

Mit einer erfindungsgemässen Vorrichtung, die in ihren wesentlichen Teilen der in Fig. 4 dargestellten Vorrichtung entsprach, wurden Messreihen für unterschiedliche Durchflussmengen auf der Lösungsseite und auf der Kondensatseite durchgeführt. Die jeweils eingestellten bzw. erhaltenen Temperaturen t, Durchflussmengen Q und Drücke P wurden an den in Figur 4 mit A bis D (die Buchstaben sind dort eingekreist) gemessen. Die Ergebnisse sind in Tabelle 1 zusammengestellt.

Die poröse Trennwand bestand hierbei aus sechs 9,2 m langen Rohren aus porösem Polypropylen mit einer netzartig aufgebauten Porenstruktur. Der Aussendurchmesser der Rohre betrug 9 mm, der Innendurchmesser 6 mm. Die Messstelle A lag an der Eintrittsseite für die Lösung in die Destillationsvorrichtung, die Messstelle B an der Austrittsseite für die Lösung aus der Destillationsvorrichtung, die Messstelle C an der Eintrittsseite für das Kondensat in die Destillationsvorrichtung und die Messstelle D an der Austrittsseite für das Kondensat aus der Destillationsvorrichtung.

Bei der Ermittlung der Durchflussmenge Q wurde jeweils nur die in die Destillationsvorrichtung eintretende Lösungs- bzw. Kondensatmenge gemessen. Das aus der Überlaufleitung (Pos. 5b in Figur 4) austretende Kondensat wurde aufgefangen und gewogen. Mit den dabei erhaltenen Werten erfolgte die rechnerische Ermittlung der pro Stunde und pro m² porösen Trennwand erhaltenen Destillatmenge D, die in der letzten Spalte der Tabelle 1 aufgeführt ist. Die Lösung strömte hierbei durch das Innere (Lumen) der Rohre, während das Kondensat die Aussenseite der Rohre umströmte. Die Kondensatseite stand über die Überlaufleitung 5b mit der Umgebung, also mit Atmosphärendruck, in Verbindung, während die Lösungsseite an eine Unterdruck-Einrichtung angeschlossen war.

Die Indices der Messwertsymbole in Tabelle 1 geben an, an welcher Messstelle der betreffende Wert ermittelt wurde; so bedeutet beispielsweise $t_B$ die an der Messstelle B ermittelte Temperatur, d.h. die Temperatur der aus der Destillationsvorrichtung austretenden Lösung.

Die in Tabelle 1 zusammengestellten Messreihen zeigen deutlich den Einfluss der Durchflussmengen auf der Lösungs- bzw. auf der Kondensatseite auf die erhältliche Destillatmenge.

Darüber hinaus zeigen diese Messreihen, dass das erfindungsgemässe Verfahren auch dann zu guten Ergebnissen führt, wenn auf der Lösungsseite Drücke eingestellt werden, die teilweise oberhalb Atmosphärendruck liegen, solange zumindest bereichsweise wenigstens der Bereich des Siedepunktes der Lösung erreicht wird.

In Tabelle 2 sind zu Vergleichszwecken die Analysewerte von Leitungswasser, von aus Leitungswasser durch das erfindungsgemässe Transmembrandestillationsverfahren erhaltenem Destillat, von ebenso aus 0,1%-iger NaCl-Lösung erhaltenem Destillat und von vollentsalztem (VE) Wasser, wie es in Labors verwendet wird, zusammengestellt.

### Tabelle 1

| Nr. | Lösung $Q_A$ l/h | Kondensatseite $Q_C$ l/h | Lösungsseite $t_A$ °C | $t_B$ °C | Kondensatseite $t_C$ °C | $t_D$ °C | Lösungsseite $P_A$ mbar | $P_B$ mbar | Destillat D l/m²h |
|---|---|---|---|---|---|---|---|---|---|
| 1 | 50 | 50 | 100 | 51 | 33 | 76 | 1100 | 215 | 3,87 |
| 2 | 100 | 100 | 101 | 59 | 42 | 80 | 1190 | 295 | 6,67 |
| 3 | 300 | 300 | 104 | 72 | 52 | 80 | 1340 | 360 | 15,25 |
| 4 | 600 | 600 | 112 | 83 | 68 | 94 | 1790 | 580 | 31,3 |
| 5 | 25 | 250 | 100 | 32 | 27 | 31 | 100 | 220 | 2,6 |
| 6 | 250 | 25 | 101 | 87 | 34 | 99 | 1630 | 680 | 5,0 |

### Tabelle 2

| Wasserproben | Kationen mg/l Na | K | Li | Mg | Ca | Anionen mg/l Cl | $NO_3$ | $SO_3$ | $SiO_2$ | $HCO_3 + CO_2$ | *) µS/cm |
|---|---|---|---|---|---|---|---|---|---|---|---|
| Leitungswasser | 23,6 | 3,34 | 0,042 | 9,10 | 44 | 13,1 | 17,3 | 25,0 | 31,1 | 24,5 | ~600 |
| TMD Permeat aus Leitungswasser | 0,007 | 0,003 | 0,001 | 0,001 | <0,01 | <0,01 | <0,02 | <0,1 | <0,01 | 10 | 15 |
| TMD Permeat aus 0,1% NaCl/Lösung | 0,026 | 0,007 | 0,001 | 0,002 | <0,01 | <0,01 | <0,02 | <0,05 | <0,01 | <0,6 | 1,7 |
| zum Vergleich Labor VE-Wasser | 0,076 | 0,054 | 0,000 | 0,000 | <0,01 | <0,01 | <0,02 | <0,1 | <0,01 | 0,23 | 3 |

* el. Leitfähigkeit

Zur Vermeidung von Missverständnissen sei an dieser Stelle noch einmal nachdrücklich darauf hingewiesen, dass ein Vergleich nicht erfindungsgemässer Fahrweisen mit der erfindungsgemässen Fahrweise immer nur unter der Voraussetzung aussagekräftig ist, dass auf der Destillatseite (Kondensatseite) vergleichbare Temperaturverhältnisse herrschen, d.h., dass insbesondere die Eintritts- und die Austrittstemperaturen des Destillates bzw. des Kondensates bei den zum Vergleich anstehenden Fahrweisen zumindest weitestgehend gleich sind. Dass allein die Erhöhung der Lösungsmenge bei gleichbleibender Eintrittstemperatur der Lösung oder eine Erhöhung der Durchflussmenge auf der Destillatseite bei gleichbleibender Eintrittstemperatur auf

31 0 094 543 32

dieser Seite aufgrund der dadurch erreichbaren grösseren mittleren Temperaturdifferenz zwischen Lösungsseite und Destillatseite auch bei nicht erfindungsgemässer Fahrweise bereits zu einer Erhöhung des Destillatflusses durch die poröse Trennwand führt, ist allgemein bekannt und selbstverständlich. Ein objektiver Vergleich nicht erfindungsgemässer Fahrweisen mit dem erfindungsgemässen Verfahren wäre bei Nichtbeachtung dieser Gegebenheiten daher nicht möglich. Wird also beispielsweise durch Einstellen von dem Dampfdruck entsprechendem Unterdruck auf der Lösungsseite oder durch Temperaturerhöhung auf der Lösungsseite erfindungsgemäss der Siedepunkt erreicht, wodurch ein höherer transmembraner Destillatfluss erreicht wird, so wird bei unverändert belassener Durchflussmenge auf der Destillatseite (Kondensat) die Kondensataustrittstemperatur ansteigen, da nunmehr die erhöhte Destillatmenge von der gleichen Kondensatmenge aufgenommen und kondensiert wird und die entsprechend höhere Kondensationswärmeenergie ins Kondensat übergeht. Durch diese Fahrweise verringert sich folglich die mittlere Temperaturdifferenz zwischen der Lösungsseite und der Kondensatseite, so dass ein Vergleich der beiden beschriebenen Fahrweisen zu falschen Schlüssen führen müsste. Ein Vergleich ist dagegen dann möglich, wenn bei der beschriebenen erfindungsgemässen Fahrweise die Durchflussmenge auf der Kondensatseite so hoch eingestellt wird, dass die Kondensataustrittstemperatur unverändert bleibt und somit auch die mittlere Temperaturdifferenz zwischen Lösungsseite und Kondensatseite sich nicht ändert.

## Patentansprüche

1. Verfahren zum wenigstens teilweisen Abtrennen mindestens eines flüssigen Bestandteiles einer Lösung durch Überführen desselben in die Dampfphase, bei welchem die Lösung und das Destillat durch eine poröse Trennwand voneinander getrennt gehalten werden, die nur für das dampfförmige Destillat und gegebenenfalls vorhandene Gase durchlässig ist und mit der die Lösung und das Destillat in Berührungskontakt gehalten werden, bei welchem das Überführen in die Dampfphase auf der Lösungsseite der Poren der porösen Trennwand erfolgt und das dampfförmige Destillat durch die Poren zur Destillatseite diffundiert, dadurch gekennzeichnet, dass während der Dauer des Abtrennvorganges durch Druck- und/oder Temperatursteuerung stets wenigstens in einem Teilbereich der unmittelbaren Umgebung der porösen Trennwand auf der Lösungsseite die absolute Temperatur der Lösung auf höchstens 3% unterhalb der dem herrschenden Druck entsprechenden Siedetemperatur eingestellt wird und dass auf der Destillatseite weder mit einem Gas noch mit einem Schleppgas gearbeitet wird.

2. Verfahren nach Anspuch 1, dadurch gekennzeichnet, dass auf der Destillatseite der porösen Trennwand ein hydrostatischer Druck eingestellt wird, der höher ist als der Dampfdruck auf der Destillatseite und dass das Destillat auf eine Temperatur gebracht wird, die unterhalb seiner Siedetemperatur bei diesem Druck liegt, so dass die Kondensation des dampfförmigen Destillates auf der Destillatseite der Poren der porösen Trennwand stattfindet.

3. Verfahren nach den Ansprüchen 1 bis 2, dadurch gekennzeichnet, dass wenigstens auf der Lösungsseite der porösen Trennwand ein hydrostatischer Druck eingestellt wird, der geringer ist als der Atmosphärendruck.

4. Verfahren nach Anspruch 3, dadurch gekennzeichnet, dass auch auf der Destillatseite der porösen Trennwand ein hydrostatischer Druck eingestellt wird, der geringer ist als der Atmosphärendruck.

5. Verfahren nach den Ansprüchen 1 bis 4, dadurch gekennzeichnet, dass wenigstens in den Poren der porösen Trennwand ein Druck eingestellt wird, der weitestgehend dem jeweiligen Dampfdruck der Lösung entspricht.

6. Verfahren nach den Ansprüchen 1 bis 5, dadurch gekennzeichnet, dass auf der Destillatseite der porösen Trennwand ein höherer hydrostatischer Druck eingestellt wird als auf der Lösungsseite der porösen Trennwand.

7. Verfahren nach den Ansprüchen 1 bis 6, dadurch gekennzeichnet, dass die Lösung und/oder das gegebenenfalls kondensierte Destillat an der porösen Trennwand entlangströmt.

8. Verfahren nach den Ansprüchen 1 bis 7, dadurch gekennzeichnet, dass die poröse Trennwand eine künstlich hergestellte Membran ist.

9. Verfahren nach den Ansprüchen 1 bis 8, dadurch gekennzeichnet, dass vor dem und/oder gleichzeitig mit dem Überführen mindestens eines flüssigen Bestandteiles der Lösung in die Dampfphase der Lösung Wärmeenergie zugeführt wird.

10. Verfahren nach den Ansprüchen 1 bis 9, dadurch gekennzeichnet, dass nach dem und/oder gleichzeitig mit dem Überführen mindestens eines flüssigen Bestandteiles der Lösung in die Dampfphase dem Destillat (Kondensat) Wärmeenergie entzogen wird.

11. Verfahren nach den Ansprüchen 1 bis 10, dadurch gekennzeichnet, dass ein Teil der der Lösung zugeführten Wärmeenergie dem Destillat bzw. Kondensat entzogen wird.

12. Verfahren nach den Ansprüchen 1 bis 11, dadurch gekennzeichnet, dass eine netzartig aufgebaute poröse Trennwand verwendet wird, bei der die durchgehenden auf der Lösungsseite und auf der Destillatseite mündenden offenen Poren durch gas- bzw. dampfdurchlässige Öffnungen, Kanäle, Poren od.dgl. Querverbindungen miteinander verbunden sind.

13. Vorrichtung zum Durchführen des Verfahrens nach den Ansprüchen 1 bis 12, bestehend aus wenigstens einem Behälter, der durch wenigstens eine poröse Trennwand in wenigstens zwei Kammern unterteilt ist, wovon die eine Kammer zur Aufnahme der Lösung und die andere Kammer zur Aufnahme des Destillates bestimmt ist, dadurch gekennzeichnet, dass die Kammer (1a) zur Aufnahme der Lösung und/oder die Kammer (1b) zur Aufnahme des Destillats und/oder die poröse Trennwand (2) neben den üblichen Fördereinrichtungen (7a, 7b) zusätzliche Mittel (9a; 9b; 9c) aufweist (aufweisen), mit denen jedes der genannten Teile (1a; 1b; 2) an eine Einrichtung zur Erzeugung von Unterdruck (Vakuum) oder Überdruck angeschlossen ist.

14. Vorrichtung nach Anspruch 13, dadurch gekennzeichnet, dass nur die zum Einstellen eines weitestgehend dem jeweiligen Dampfdruck der Lösung entsprechenden Druckes in ihren Poren geeignete poröse Trennwand (2) an eine Einrichtung zur Erzeugung von Unterdruck (Vakuum) oder Überdruck anschliessbar ist.

15. Vorrichtung nach den Ansprüchen 13 und 14, dadurch gekennzeichnet, dass die Kammer (1a) zur Aufnahme der Lösung an eine Einrichtung zur Erzeugung von Unterdruck (Vakuum) oder Überdruck anschliessbar ist.

16. Vorrichtung nach den Ansprüchen 13 bis 15, dadurch gekennzeichnet, dass der Behälter (1) mit den beiden Kammern (1a; 1b) und der porösen Trennwand (2) barometrisch aufgestellt und angeschlossen ist.

17. Vorrichtung nach den Ansprüche 13 bis 16, dadurch gekennzeichnet, dass auf der Lösungsseite eine Einrichtung (6a) zum Übertragen von Wärmeenergie in die Lösung angeordnet ist.

18. Vorrichtung nach den Ansprüchen 13 bis 17, dadurch gekennzeichnet, dass auf der Destillatseite (Kondensatseite) eine Einrichtung zum Entziehen von Wärmeenergie aus dem Destillat (Kondensat) angeordnet ist.

19. Vorrichtung nach den Ansprüchen 13 bis 18, dadurch gekennzeichnet, dass vor der Kammer (1a) zur Aufnahme der Lösung und nach der Kammer (1b) zur Aufnahme des Destillates (Kondensates) eine Wärmeübertragungseinrichtung (18) angeordnet ist, mit welcher zum Kühlen des Kondensates und Aufwärmen (Vorwärmen) der Lösung Wärmeenergie aus dem Kondensat in die Lösung übertragen werden kann.

20. Vorrichtung nach den Ansprüchen 13 bis 19, gekennzeichnet durch eine netzartig aufgebaute poröse Trennwand, bei der die durchgehenden auf der Lösungsseite und auf der Destillatseite mündenden offenen Poren durch gas- bzw. dampfdurchlässige Öffnungen, Kanäle, Poren od. dgl. Querverbindungen miteinander verbunden sind.

**Claims**

1. A process for the separation, at least in part, of at least one liquid constituent of a solution by means of the transfer of the same into the vapour phase, whereby the solution and the distillate are kept separated from each other by a porous dividing wall which can only be penetrated by the vaporous distillate and, if necessary, by any gases which are present, and with which the solution and the distillate are kept in contact, whereby the transfer into the vapour phase takes place on the solution side of the pores of the porous dividing wall, and the vaporous distillate diffuses through the pores to the distillate side, characterised in that while the separation process is taking place by means of pressure control and/or temperature control continuously at least in a part of the immediate surroundings of the porous dividing wall on the solution side the absolute temperature of the solution is set at 3% at the most below the boiling temperature which corresponds to the prevailing pressure, and in that on the distillate side neither a gas nor a separating gas is used.

2. A process according to claim 1, characterised in that on the distillate side of the porous dividing wall a hydrostatic pressure is set, which is higher than the vapour pressure on the distillate side, and in that the distillate is brought to a temperature which is lower than its boiling point at that pressure, with the result that the condensing of the vaporous distillate takes place on the distillate side of the pores of the porous dividing wall.

3. A process according to claims 1 to 2, characterised in that, at least on the solution side of the porous dividing wall, a hydrostatic pressure is set which is lower than the atmospheric pressure.

4. A process according to claim 3, characterised in that, on the distillate side of the porous dividing wall, a hydrostatic pressure is set which is less than the atmospheric pressure.

5. A process according to claims 1 to 4, characterised in that, at least in the pores of the porous dividing wall, a pressure is set which most fully corresponds to the vapour pressure of the solution at the time.

6. A process according to claims 1 to 5, characterised in that, on the distillate side of the porous dividing wall, a higher hydrostatic pressure is set than on the solution side of the porous dividing wall.

7. A process according to claims 1 to 6, characterised in that the solution and/or the distillate which has been condensed, as necessary, flows along the porous dividing wall.

8. A process according to claims 1 to 7, characterised in that the porous dividing wall is a man-made membrane.

9. A process according to claims 1 to 8, characterised in that, before and/or at the same time as at least one liquid constituent of the solution is transferred into the vapour phase, heat energy is supplied to the solution.

10. A process according to claims 1 to 9, characterised in that, after and/or at the same time as at least one liquid constituent of the solution is transferred into the vapour phase, heat energy is taken away from the distillate (condensate).

11. A process according to claims 1 to 10, characterised in that some of the heat energy which is supplied to the solution is removed from the distillate and/or condensate.

12. A process according to claims 1 to 11, characterised in that a porous dividing wall which has a net-like structure is used in which the penetrating, open pores which open on the solution side and on the distillate side are connected with each other by means of gaspermeable and/or vapour-permeable openings, channels, pores or similar cross connections.

13. A device for the carrying out of the process according to claims 1 to 12, consisting of at least one receptacle which is divided into at least two chambers by means of at least one porous dividing wall, of which one of the chambers is designed to receive the solution and the other chamber is designed to receive the distillate, characterised in that, in addition to the usual conveying equipment (7a, 7b), chamber (1a), for the receiving of the solution and/or chamber (1b), for the receiving of the distillate and/or the porous dividing wall (2) has/have additional devices (9a; 9b; 9c) with which each of the parts mentioned (1a; 1b; 2) is connected to a device for the production of diminished pressure (vacuum) or excess pressure.

14. A device according to claim 13, characterised in that only the porous dividing wall (2) which is suited to the setting of a pressure in its pores which most fully corresponds to the vapour pressure of the solution at the time can be connected to a device for the production of diminished pressure (vacuum) or excess pressure.

15. A device according to claims 13 and 14, characterised in that chamber (1a), for the receiving of the solution, can be connected to a device for the production of diminished pressure (vacuum) or excess pressure.

16. A device according to claims 13 to 15, characterised in that the receptacle (1) with both chambers (1a; 1b) and with the porous dividing wall is erected and connected barometrically.

17. A device according to claims 13 to 16, characterised in that a device (6a) for the transfer of heat energy into the solution is fitted on the solution side.

18. A device according to claims 13 to 17, characterised in that a device for the removal of heat energy from the distillate (condensate) is fitted on the distillate side (condensate side).

19. A device according to claims 13 to 18, characterised in that, before chamber (1a) for the receiving of the solution and after chamber (1b) for the receiving of the distillate (condensate) a heat transfer device (18) is fitted with which heat energy can be transferred from the condensate into the solution for the cooling of the condensate and the heating (preheating) of the solution.

20. A device according to claims 13 to 19, characterised by a porous dividing wall which has a net-like structure, in which the penetrating, open pores which open on the solution side and on the distillate side are connected with each other by means of gas-permeable and/or vapour-permeable openings, channels, pores or similar cross connections.

**Revendications**

1. Procédé pour la séparation au moins partielle d'au moins un constituant liquide d'une solution par transfert de celui-ci dans la phase vapeur, dans lequel la solution et le distillat sont maintenus séparés l'un de l'autre par une cloison poreuse, qui n'est perméable que pour le distillat sous forme de vapeur et les gaz éventuellement présents et avec laquelle la solution et le distillat sont maintenus en contact, dans lequel le transfert dans la phase vapeur s'effectue du côté solution des pores de la cloison poreuse et le distillat sous forme de vapeur diffuse à travers les pores vers le côté distillat, caractérisé en ce que, pendant la durée du processus de séparation, par réglage de la température et/ou de la pression, dans au moins un domaine partiel de l'environnement immédiat de la cloison poreuse du côté solution, la température absolue de la solution est réglée constamment à 3% au plus au-dessous de la température d'ébullition correspondant à la pression régnante et en ce que du côté distillat, on ne travaille ni avec un gaz, ni avec un gaz d'entraînement.

2. Procédé selon la revendication 1, caractérisé en ce que l'on ajuste, du côté distillat de la cloison poreuse, une pression hydrostatique qui est plus élevée que la pression de vapeur du côté distillat, et que l'on amène le distillat à une température qui est au-dessous de sa température d'ébullition à cette pression, de telle sorte que la condensation du distillat à l'état vapeur s'effectue du côté distillat des pores de la cloison poreuse.

3. Procédé selon les revendications 1 à 2, caractérisé en ce qu'on ajuste, au moins du côté solution de la cloison poreuse, une pression hydrostatique qui est plus faible que la pression atmosphérique.

4. Procédé selon la revendication 3, caractérisé en ce qu'on ajuste, du côté distillat de la cloison poreuse, une pression hydrostatique qui est plus faible que la pression atmosphérique.

5. Procédé selon les revendications 1 à 4, caractérisé en ce qu'on ajuste, au moins dans les pores de la cloison poreuse, une pression qui correspond dans la plus large mesure à la pression de vapeur de la solution dans chaque cas.

6. Procédé selon les revendications 1 à 5, caractérisé en ce qu'on ajuste du côté distillat de la cloison poreuse une pression hydrostatique plus élevée que du côté solution de la cloison poreuse.

7. Procédé selon les revendications 1 à 6, caractérisé en ce que la solution et/ou le distillat, le cas échéant condensé, s'écoulent le long de la cloison poreuse.

8. Procédé selon les revendications 1 à 7, caractérisé en ce que la cloison poreuse est une membrane artificielle.

9. Procédé selon les revendications 1 à 8, caractérisé en ce qu'avant et/ou en même temps que le transfert d'au moins un constituant liquide de la solution dans la phase vapeur, de l'énergie thermique est apportée à la solution.

10. Procédé selon les revendications 1 à 9, caractérisé en ce qu'après et/ou en même temps que le transfert d'au moins un constituant liquide de la solution dans la phase vapeur, de l'énergie thermique est retirée du distillat (condensat).

11. Procédé selon les revendications 1 à 10, caractérisé en ce qu'une partie de l'énergie thermique apportée à la solution est retirée du distillat ou du condensat.

12. Procédé selon les revendications 1 à 11, caractérisé en ce qu'on utilise une cloison poreuse en forme de filet, dans laquelle les pores ouverts pénétrant du côté solution et débouchant du côté distillat sont reliés entre eux par des ouvertures, canaux, pores ou autres liaisons transversales perméables aux gaz ou aux vapeurs.

13. Dispositif pour effectuer le procédé selon les revendications 1 à 12, se composant d'au moins un récipient qui est subdivisé par au moins une cloison poreuse en au moins deux chambres, dont l'une est destinée à recevoir la solution et l'autre à recevoir le distillat, caractérisé en ce que la chambre (1a) destinée à recevoir la solution et/ou la chambre (1b) destinée à recevoir le distillat et/ou la cloison poreuse (2) présentent, en plus des dispositifs de transport (7a, 7b) habituels, des moyens supplémentaires (9a; 9b; 9c), avec lesquels les parties indiquées (1a; 1b; 2) sont reliées à un dispositif pour la production d'une dépression (vide) ou d'une surpression.

14. Dispositif selon la revendication 13, caractérisé en ce que seule la paroi poreuse (2) appropriée pour l'ajustement d'une pression correspondant dans la plus large mesure possible à la pression de vapeur de la solution peut être reliée à un dispositif pour la production d'une dépression (vide) ou d'une surpression.

15. Dispositif selon les revendications 13 et 14, caractérisé en ce que la chambre (1a) destinée à recevoir la solution peut être reliée à un dispositif pour la production d'une dépression (vide) ou d'une surpression.

16. Dispositif selon les revendications 13 à 15, caractérisé en ce que le récipient (1) avec les deux chambres (1a; 1b) et la cloison poreuse (2) est installé et raccordé barométriquement.

17. Dispositif selon les revendications 13 à 16, caractérisé en ce qu'un dispositif (6a) pour le transfert d'énergie thermique à la solution est disposé du côté solution.

18. Dispositif selon les revendications 13 à 17, caractérisé en ce qu'un dispositif pour l'extraction d'énergie thermique du distillat (condensat) est disposé du côté distillat (côté condensat).

19. Dispositif selon les revendications 13 à 18, caractérisé en ce qu'avant la chambre (1a) destinée à recevoir la solution et après la chambre (1b) destinée à recevoir le distillat (condensat) on a placé un dispositif de transfert de chaleur (18) grâce auquel de l'énergie thermique provenant du condensat peut être transférée dans la solution pour le refroidissement du condensat et le réchauffage (préchauffage) de la solution.

20. Dispositif selon les revendications 13 à 19, caractérisé par une cloison poreuse en forme de filet dans laquelle les pores ouverts qui pénètrent du côté de la solution et qui débouchent du côté du distillat sont reliés les uns aux autres par des ouvertures, canaux, pores ou autres liaisons transversales perméables aux gaz et aux vapeurs.

*Fig. 1*

*Fig. 2*

0 094 543

Fig. 11

Fig. 3

23

# Fig. 4

Fig. 5

Fig. 5b

0 094 543

Fig.5a

Fig. 6

Fig. 7

Fig. 7a

Fig. 7b

Fig. 8

0 094 543

Fig. 9

Fig. 10

0 094 543

Fig. 11

Fig.12

37

Fig.13

Fig.14

Fig.15

$$\frac{l}{m^2\,h}$$

Fig.16

Fig.17

Fig.18